# EUROPEAN PATENT SPECIFICATION

(11) **EP 0 766 462 B1**
(45) Date of publication and mention of the grant of the patent: **09.07.2003**
(21) Application number: 96306707.9
(22) Date of filing: 16.09.1996
(51) Int. Cl.: H04N 5/44, H04N 5/46

(54) **Receiver having analog and digital video modes and receiving method thereof**
Empfänger mit analogen und digitalen Videobetriebsarten und Empfangsverfahren dafür
Récepteur à modes analogiques et numériques et méthode de réception associée

(30) Priority: 29.09.1995 KR 9532893
(43) Date of publication of application: 02.04.1997
(73) Proprietor: SAMSUNG ELECTRONICS CO., LTD., Suwon-city, Kyungki-do 441-373 (KR)
(72) Inventor: Jeon, Byeungwoo, Seongnam-City, Kyungki-do (KR); Song, Dong-il, Suwon-city, Kyungki-do (KR)
(74) Representative: Neill, Alastair William

(56) References cited:
- EP-A- 0 574 273
- EP-A- 0 619 675
- US-A- 5 448 300

## Description

The present invention relates to a receiver having analog and digital video modes and a receiving method thereof, and more particularly, to a receiver sharing a memory for digital television signal processing in an analog video mode, and to a receiving method thereof.

The digital video mode is to receive television signals digital-processed by the MPEG (Moving Picture Experts Group) standard from a transmitter such as a broadcasting station, and the analog video mode is to receive signals analog-processed by a conventional broadcasting method such as NTSC, PAL or SECAM. Meanwhile, a set-top-box for decoding a bitstream coded by MPEG-2, or a digital television including a set-top-box are developed, conventional analog video service is still overwhelmingly predominant. In answer to this situation, a television receiver having both analog and digital video modes is adopted. Such an analog and digital video mode television receiver requires 8-32Mb of memory for digital television signal decoding. This memory, however, is idle (i.e., unused) when the analog video mode is selected.

US 5, 448, 300 describes an image signal processor for processing at least one of an analog image signal and a digital image signal. EP-0, 574, 273 describes a receiver for selectively receiving high frequency analog modulated and digitally modulated signals, including demodulation means adapted to demodulate signals in a variety of modulation systems.

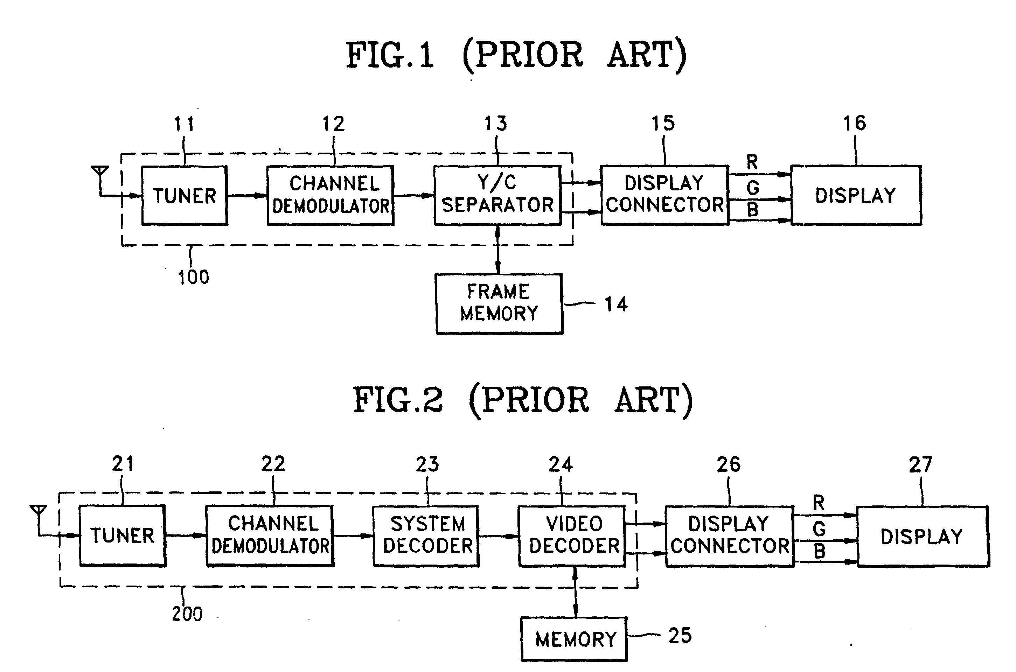

In an analog receiver having the analog video mode, as shown in Figure 1, a tuner 11 selects a desired television channel signal among received analog television channel signals, to output an intermediate frequency signal. A channel demodulator 12 amplifies and demodulates the intermediate frequency signal of the channel selected by tuner 11. (Here, though the amplified and demodulated signal is separated into audio and video signals, only the video portion will be described for the sake of simplifying the drawings and specification.) A luminance/chrominance (Y/C) separator 13 separates the video signal output from channel demodulator 12 into luminance (Y) and chrominance (C) signals, using a correlation between a current line and its adjacent ones and/or between the previous frame and current frame stored in a frame memory 14. The separated signals are stored in frame memory 14 and at the same time input to the display connector 15.

The display connector 15 converts the Y and C signals received from Y/C separator 13 into analog R, G and B signals and then outputs the converted signals to a display 16 which is, for example, a picture tube.

Tuner 11, channel demodulator 12, Y/C separator 13 correspond to an analog television signal processor 100. Further, there can be included an analog-to-digital converter for converting the output of channel demodulator 12 into digital form in order to store it in frame memory 14 as digital data, and a digital-to-analog converter for converting the output of display connector 15 into analog form in order to display it as an analog signal on display 16.

When a comb filter is used for the Y/C separation in a conventional analog television, a cross color or cross luminance phenomenon occurs due to insufficient Y/C separation. Accordingly, as shown in the circuit of Figure 1, a frame memory is used for three-dimensional Y/C separation often noted as frame comb filtering, to enhance picture quality.

Frame memory 14 may be also used for post-processing, for further enhancement of the picture quality after the Y/C separation. That is, edge components determined by the correlation between a current frame and a previous frame using frame memory 14, are emphasized. Most such methods for enhancing picture quality require a costly high-capacity memory. Therefore, a method incorporating a limited memory is generally used, even though it is not so effective.

Figure 2 is a schematic block diagram of a conventional digital television for receiving television signals coded by MPEG-2. In Figure 2, a tuner 21 selects a desired channel signal from television signals received from an antenna. Here, the television signals received from the antenna are input in an MPEG-2 packet structure.

That is, according to an MPEG-2 format, the transmitting data has a system layer structure consisting of packets of a 188-byte unit. The packet structure includes a header having sync and side information and another region having audio data, video data and user data. The video data is compressed by an inter-picture encoding or intra-picture encoding technique. Here, during the inter-picture encoding of predicted- and bi-directionally predicted picture data within each group of pictures (GOP) unit (fifteen pictures maximum) following an intra-picture, only the differences between the picture being encoded and another picture are encoded. Here, each GOP includes intra-picture data which can be independently coded without reference to any other picture data, predicted-picture data which can be coded from the preceding intra-picture data and the preceding predicted- pictures data by using motion compensation between adjacent pictures, and bi-directionally predicted picture data which can be coded from a preceding intra- or predicted- picture data and the following intra- or predicted-picture data, using motion compensation, between adjacent pictures.

A channel demodulator 22 including a quadrature phase shift-keying demodulator, a Reed-Solomon decoder and a Viterbi decoder, converts a desired digital television channel signal which is output from tuner 21, into an MPEG-2 bitstream.

A system decoder 23 separates the MPEG-2 bitstream into audio and video data streams. (Here, as in the case of Figure 1, the audio portion will not be described, though it is assumed that an audio decoder and audio signal processor are provided for decoding and signal-processing the audio stream, and only the video signal process is shown and will be described.)

A video decoder 24 includes a variable-length decoder for variable-length-decoding the video data stream output from system decoder 23, an inverse quantizer for inverse quantizing the variable-length-decoded data, an inverse discrete cosine transform (IDCT) operator for performing IDCT operation, and motion compensator for computing motion-predicted data. Video decoder 24 reconstructs the compressed data in order to display the original data on a display 27. Here, the reconstructed video is converted into an analog RGB signal by display connector 26 before being displayed on display 27.

A memory 25 is used for video-decoding, i.e., source-decoding, the digital video data performed in video decoder 24.

That is, memory 25 includes a video buffering verifier (VBV) buffer (also called a channel buffer) for converting the constant bit rate of the video data stream output from system decoder 23 into a variable bit rate before variable-length-decoding, and frame buffers for reconstructing the predicted and bi-directionally predicted pictures after compensating for motion by adding block data obtained by reading out a predetermined size of DCT blocks corresponding to a motion vector from previous frame data and inverse-DCT data. Accordingly, memory 25 requires a capacity of 8Mb to 32Mb for the frames and VBV buffers in order to decode the video data stream.

Here, tuner 21, channel demodulator 22, system decoder 23 and video decoder 24 correspond to a digital television signal processor 200. Further, the combination of digital television signal processor 200 and memory 25 is generally called a set top box (STB).

Since it is expected that analog TV services such as NTSC, PAL will continue to exist, a consumer television system must have capability to display both analog and digital video services. Two methods therefor will be described as follows.

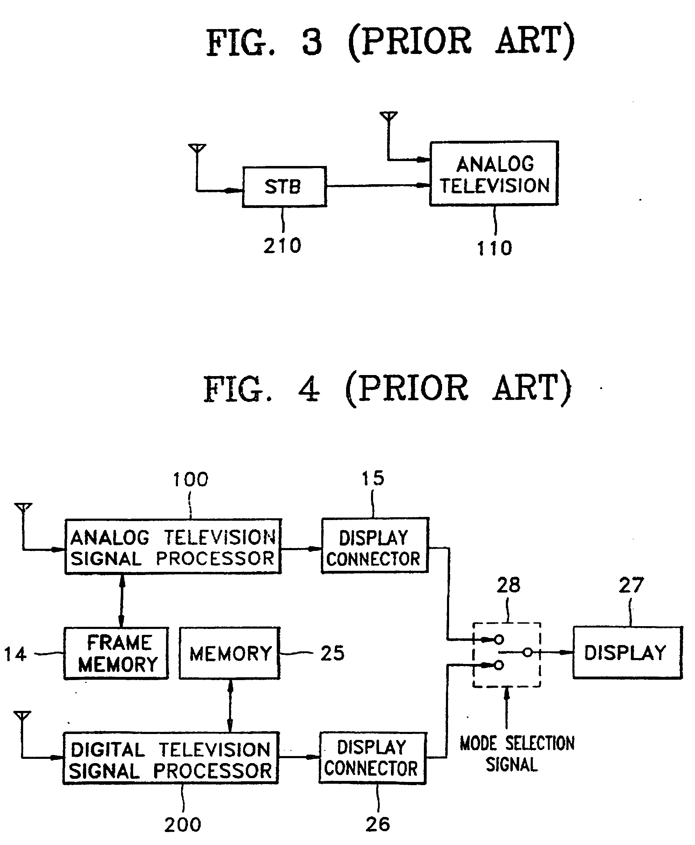

Referring to Figure 3, all processes for digital video services are performed in an STB 210 and then the reconstructed video signal is applied to a video input terminal of a conventional analog television 110. Accordingly, digital video service can be received in the analog television 110 also.

Referring to Figure 4, a television having a conventional analog video mode is provided with the digital television signal processor 200 and the memory 25, to thereby receive both analog video service and digital video service.

Accordingly, as shown in Figures 3 and 4, the memory is used for analog television signal processing, i.e., Y/C separation and post-processing, and an 8-32Mb memory is used for decoding of digital video. When a television receives only analog video service, the memory of an 8-32Mb for digital video-decoding is not used. It is thus inefficient because an existing resource within the television system cannot be used.

Accordingly, it is an aim of embodiments of the present invention to provide a receiver having analog and digital video modes, wherein a memory required for digital video signal decoding is commonly used for analog television signal processing in an analog video mode.

It is another aim to provide a receiving method wherein a memory required for decoding a digital video signal is commonly used for analog television signal processing in an analog video mode.

According to a first aspect of the invention, there is provided a receiver having an analog video mode for receiving television signals analog-processed by a predetermined analog broadcasting method and a digital video mode for receiving television signals digital-processed by a predetermined digital signal format, the receiver comprising: first signal processing means, for processing the received analog television signals; second signal processing means, for decoding the received digital television signal; a memory for storing data in order to decode the digital TV signal in said second signal processing means and process digitized analog television signal in said first signal processing means; generating means, for generating a mode selection signal which represents either said analog video mode or said digital video mode; and a memory controller, for controlling said memory according to said mode selection signal in order to write/read the signal processed in said first signal processing means, to/from said memory, during said analog video mode and write/read the digital TV signal to/from during said digital video mode.

Preferably, said first signal processing means, comprises a first tuner, for selecting a desired channel among received analog television channels, to output an intermediate frequency signal of said selected channel; a first channel demodulator for amplifying and demodulating said intermediate frequency signal of the channel selected by said first tuner, to output a video signal; and a luminance/chrominance separator for separating the luminance (Y) signal and the chrominance signal (C) from video signals output from said first channel demodulator, using a correlation between adjacent pictures stored in said memory and/or between adjacent lines stored in said memory.

The receiver preferably further comprises a post-processor for post-processing using said separated luminance signal for enhancing picture quality.

Said memory controller may include switching means for selecting one of the outputs from said first and second signal processing means according to said mode selection signal to write in said memory and supply data stored in said memory to said selected signal processing means.

Said switching means preferably includes at least one multiplexer.

Preferably, switching means are provided for selecting one of the output signals from said first signal processing means and said second signal processing means according to said mode selection signal; and display controlling means are provided for displaying the signal selected by said switching means on a display.

Preferably, the generating means and the memory controller are connected to common bus lines having a data line or multiple of data lines and a clock line for generating mode selection data which represents either said analog video mode or said digital video mode wherein first signal processing means is connected to said common bus lines, for signal-processing the analog television signal received according to the mode selection data, second signal processing means is connected to said common bus lines, for decoding the digital television signal received according to the mode selection data and a memory is connected to said common bus lines, for decoding the digital television signal from said second signal processing means, storing data processed in said first signal processing means according to said mode selection data for representing analog video service mode, and supplying the stored data to said first signal processing means.

Said first signal processing means may comprise a first tuner for selecting a desired channel among received analog television channels, to output an intermediate frequency signal; a first channel demodulator for amplifying and demodulating said intermediate frequency signal of the channel selected by said first tuner to output a video signal; and a luminance/chrominance separator for separating video signal output from said first channel demodulator into luminance (Y) signal and chrominance (C) signal using correlation between adjacent pictures stored in said memory and between adjacent lines stored in said memory.

A post-processor may be provided for post-processing said separated luminance signal for enhancing picture quality.

In said analog video mode, said memory is preferably used as a frame memory for storing data output from said first channel demodulator in a picture unit.

In said analog video mode, said memory may be used as a frame memory for storing data output from said first channel demodulator in a picture unit and data input from said post-processor in a picture unit.

Said first signal processing means may comprise: a first tuner for selecting a desired channel among received analog television channels, to output an intermediate frequency signal; a first channel demodulator for amplifying and demodulating said intermediate frequency signal of the channel selected by said first tuner and outputting a video signal; and a post-processor for post-processing using video signal output from said first channel demodulator and data stored in said memory.

In said analog video mode, said memory may be used as a frame memory for storing data output from said first channel demodulator in a picture unit.

Preferably, said second signal processing means comprises: a second tuner for selecting a desired channel signal among received television signals coded by the digital signal format; a second channel demodulator for channel-decoding the desired channel signal output from said second tuner; a system decoder for outputting a video data stream from the channel-decoded signal output from said second channel demodulator; and a video decoder for reconstructing video data from said video data stream.

In said digital video mode, said memory may be used as a channel buffer for converting the transmission rate of a constant bit rate into a variable bit rate for video-decoding and as a frame buffer for motion compensation.

Switching means may be provided for selecting one of the output signals from said first signal processing means and said second signal processing means according to said mode selection data; and display control means provided for displaying the signal selected by said switching means on display.

Preferably, the receiver may further comprise: a first input terminal for receiving digitized analog television signal; and a second input terminal for receiving channel-decoded digital television signal; and wherein the memory for storing data in order to video-decode said channel-decoded digital television signal; and still further comprises a microprocessor for processing one of the signals input into said first and second input terminals according to said mode selection signal, and for controlling said memory so that said memory is shared by writing/reading the digitized analog signal which is input into said first input terminal to/from said memory in said analog video mode; and display controlling means for controlling the signal processed by said microprocessor so as to display the signal on a display.

The receiver may further comprise a system decoder for extracting video data stream from channel-decoded digital television signal input into said second input terminal.

Preferably, said microprocessor performs luminance/chrominance separation of the digitized analog television signal input into said first input terminal, in said analog video mode, and reconstructing digital video signal from the video data stream output from said system decoder, in said digital video mode.

Said microprocessor may perform luminance/chrominance separating the digitized analog television signal which is input into said first input terminal, in said analog video mode, and performs system decoding, in said digital video mode, to thereby extract video data stream from the channel-decoded digital television signal input into said second input terminal.

A video decoder may be provided for reconstructing digital video signal from the video data stream output from said microprocessor.

Said microprocessor preferably performs luminance/chrominance separation of the digitized analog television signal input into said first input terminal in said analog video mode, and extracts video data stream from the channel-decoded digital television signals input into said second input terminal, and reconstructs digital video signal from the extracted video data stream in said digital video mode.

The receiver may further comprise a system and video decoder for extracting a video data stream from the channel-decoded digital television signal input into said second input terminal and reconstructing digital video signal from the extracted video data stream.

Said microprocessor preferably performs luminance/chrominance separation of the digitized analog television signals input into said first input terminal, in said analog video mode, and writes and reads said digital television signal to and from said memory for system-decoding and video-decoding, in said digital video mode.

Said microprocessor may perform post-processing using separated luminance signal.

Preferably, said memory is used as a frame memory for luminance/chrominance separation of the digitized analog television signal, in said analog video mode.

Said memory may be used as a frame memory for luminance/chrominance separation and post-processing, in said analog video mode.

Said memory may be used as a channel buffer for converting the transmission rate of a constant bit rate into a variable bit rate, as a frame buffer for motion compensation, and as a display buffer.

Said microprocessor may post-process digitized analog television signal input into said first input terminal, in said analog video mode, and reconstruct digital video signal output from said system decoder, in said digital video mode.

Preferably, said microprocessor performs post-processing of the digitized analog television signal input into said first input terminal, in said analog video mode, and system-decoding of the channel-decoded digital television signal input into said second input terminal, in said digital video mode, to thereby extract video data stream.

Said microprocessor may further comprise a video decoder for reconstructing said video data stream from said digital video signal.

Said microprocessor preferably performs post-processing of the digitized analog television signal input into said first input terminal, in said analog video mode, and system-decoding of the channel-decoded digital television signal input into said second input terminal, in said digital video mode, to thereby extract video data stream, and reconstructs digital video signal from the extracted video data stream.

The receiver may further comprise a system and video decoder for extracting video data stream from channel-decoded digital television signal input into said second input terminal and reconstructing video data from the extracted video data stream.

Preferably, said microprocessor performs post-processing of the digitized analog television signal input into said first input terminal, in said analog video mode, and writes and reads said digital television signal to and from said memory for system-decoding and video-decoding, in said digital video mode.

Said memory may be used as a frame memory for post-processing, in said analog video mode.

Said memory may be used as a channel buffer for converting the transmission rate of a constant bit rate into a variable bit rate, as a frame buffer for motion compensation, and as a display buffer, in said digital video mode.

Preferably, the receiver may further comprise: a first input terminal for receiving a channel-demodulated analog TV signal; and a second input terminal for receiving a channel-decoded digital TV signal; and wherein the memory for storing data either in a process of source-decoding said channel-decoded digital television signal or in a process of processing said channel-demodulated analog television signal; and still further comprises a microprocessor for writing/reading said digital television signal during said digital video mode or said digitized analog television signal during said analog video mode, to and from said memory according to said mode selection signal; analog processing means having an input terminal for receiving said channel-demodulated analog television signal, an input terminal for receiving data read from said memory through said microprocessor, an output terminal for outputting data to said microprocessor to store said data into said memory and an output terminal for outputting processed analog television signal; digital processing means having an input terminal for receiving said channel-decoded digital television signal, input and output terminals connected to said microprocessor, and a terminal for outputting said video signal reconstructed from said channel-decoded digital television signal; switching means for selecting one of said reconstructed digital video signal and said processed analog television signal according to said mode selection signal; and display controlling means for controlling the signal output from said switching means to display the signal on a display.

Said digital processing means preferably extracts video data stream from said channel-decoded digital television signal by system decoding, and reconstructs digital video signal from said extracted video data stream.

Said digital processing means may extract video data stream from said channel-decoded digital. television signal, reconstructs digital video signal from said extracted video data stream, and converts said reconstructed digital video signal into analog video signal.

Preferably, said memory is used as a channel buffer for converting the transmission rate of a constant bit rate into a variable bit rate, as a frame buffer for motion compensation, and as a display buffer, in said digital mode.

Said analog processing means may perform luminance/chrominance separation of said channel-demodulated analog television signal.

In said analog video mode, said memory is preferably used as a frame memory for luminance/chrominance separation of said channel-demodulated analog television signal.

Preferably, the receiver may further comprise: a first input terminal for receiving a channel-demodulated analog TV signal; and a second input terminal for receiving a channel-decoded digital TV signal; and wherein the memory for storing data in a process of either video-decoding of said channel-decoded digital television signal or in a process of processing said channel-demodulated analog television signal; and still further comprises a microprocessor having an input terminal for receiving said channel-decoded digital television signal, reconstructing digital video signal from said digital television signal in said digital video mode and for writing/reading said digital television signal during said digital video mode or said digitized analog television signal during said analog video mode, to and from said memory according to said mode selection signal; analog processing means having an input terminal for receiving said channel-demodulated analog television signal, an input terminal for receiving data read from said memory through said microprocessor, an output terminal for outputting data to said microprocessor to store said data into said memory and an output terminal for outputting processed analog television signal; digital processing means for converting said reconstructed digital video signal output from said microprocessor into analog signal; switching means for selecting one of said reconstructed digital video signal from said microprocessor and said processed analog television signal; and display controlling means for controlling the signal output from said switching means to display the signal on a display.

Preferably, said microprocessor multiplexes said channel-decoded digital television signal, extracts video data stream from said channel-decoded digital television signal by system-decoding, and reconstructs said digital video signal from said extracted video data stream.

The receiver may further comprise a digital processing means for converting reconstructed digital video signal output from said microprocessor into analog signals and then supplying the converted analog signal to said switching means.

Said display controlling means preferably converts said switched signal into analog signal.

Said memory may be used as a buffer for temporarily storing said channel-demodulated analog television signal, as a channel buffer for converting the transmission rate of a constant bit rate into a variable bit rate, as a frame buffer for motion compensation, and as a display buffer.

Preferably, the receiver may further comprise: a first input terminal for receiving a channel-demodulated analog TV signal; and a second input terminal for receiving a channel-decoded digital TV signal; and wherein the memory for storing data either in a process of source-decoding said channel-decoded digital television signal or in a process of processing channel-demodulated said analog television signal; and still further comprises a microprocessor having an input terminal for receiving said channel-decoded digital television signal, extracting video data stream from said channel-decoded digital television signal in said digital video mode, and for writing/reading said digital television signal during said digital video mode or said digitized analog television signal during said analog video mode, to/from said memory according to said mode selection signal; analog processing means having an input terminal for receiving said channel-demodulated analog television signal, an input terminal for receiving data read from said memory through said microprocessor, an output terminal for outputting data to said microprocessor to store said data into said memory, and an output terminal for outputting processed analog television signal; digital processing means for reconstructing digital video signal from said video data stream; switching means for selecting one of output signal of said digital processing means and said processed analog TV signal; and display controlling means for controlling the signal output from said switching means to display the signal on a display.

Preferably, said microprocessor multiplexes said channel-decoded digital television signal and extracts video data stream from said channel-decoded digital television signal.

Said digital processing means may convert reconstructed digital video signals into analog signal.

Said display controlling means may convert the signal switched in said switching means into analog signal.

Preferably, said memory is used as a buffer for temporarily storing said channel-demodulated analog television signal, as a channel buffer for converting a transmission rate of a constant bit rate into a variable bit rate, as a frame buffer for motion compensation, and as a display buffer, in said digital video mode.

Preferably, said analog processing means performs luminance/chrominance separation of said channel-demodulated analog television signal.

Said memory may be used as a frame memory for luminance/chrominance separation of said channel-demodulated analog television signal, in said analog video mode.

Said analog processing means preferably performs post-processing of said channel-demodulated analog television signal.

Said memory may be used as a frame memory for post-processing of said channel-demodulated analog television signal, in said analog video mode.

Preferably, said analog processing means performs luminance/chrominance separation and post-processing of said channel-demodulated analog television signal.

Said memory may be used as a frame memory for luminance/chrominance separation and post-processing of said channel-demodulated analog television signal, in said analog video mode.

Preferably, the receiver may further comprise: a first input terminal for receiving a channel-demodulated analog TV signal; and a second input terminal for receiving a channel-decoded digital TV signal; and wherein the memory for storing data in a process of either source-decoding said channel-decoded digital television signal or processing channel-demodulated said analog television signal; and still further comprises digital processing means including an input terminal for receiving said channel-decoded digital television signal and for extracting video data stream from said channel-decoded digital television; a microprocessor for inputting video data stream extracted from said digital processing means, thereby reconstructing digital video signal, and writing and reading digitized analog television signal to/from said memory in analog video mode; analog processing means having an input terminal for receiving said channel-demodulated analog television signal, an input terminal for receiving data read from said memory through said microprocessor, an output terminal for outputting data to said microprocessor to store said data into said memory, and an output terminal for outputting processed analog television signal; switching means for selecting one of output signal of said digital processing means and said processed analog TV signal; and display controlling means for controlling the signal output from said switching means to display the signal on a display.

The receiver may further comprise converting means for converting digital video signal reconstructed in said microprocessor into analog signal and then supplying the converted analog signal to said switching means, where the signal output from said analog processing means is an analog signal.

Said display controlling means preferably converts the signal switched in said switching means into analog signal, where the switched signal is a digital signal.

Said memory may be used as a channel buffer for converting a transmission rate of a constant bit rate into a variable bit rate, as a frame buffer for motion compensation, and as a display buffer, in said digital video mode.

Said analog processing means preferably performs luminance/chrominance separation of said channel-demodulated analog television signal.

Said memory may be used as a frame memory for luminance/chrominance separation of said channel-demodulated analog television signal, in said analog video mode.

Said analog processing means may perform post-processing of said channel-demodulated analog television signals.

Said memory is preferably used as a frame memory for post-processing of said channel-demodulated analog television signal, in said analog video mode.

Said analog processing means preferably performs luminance/chrominance separation and post-processing said channel demodulated analog television signal.

Said memory may be used as a frame memory for luminance/chrominance separation and post-processing of said channel-demodulated analog television signal, in said analog video mode.

According to a second aspect of the present invention, there is provided a method for receiving television signal analog-processed according to a predetermined analog broadcasting method and television signal digital-processed by a predetermined digital signal format, comprising the steps of: (a) generating a mode selection signal to determine whether a channel selected by a user is a television channel of an analog video mode or a television channel of a digital video mode; (b) according to said mode selection signal, either storing received digital television signal in a memory for digital video-decoding and decoding the data stored in said memory in said digital video mode, or storing received analog television signal in said memory for digital video-decoding and reading the data stored in said memory to process the data in said memory in said analog video mode.

For a better understanding of the invention, and to show how embodiments of the same may be carried into effect, reference will now be made, by way of example, to the accompanying diagrammatic drawings, in which:
Figure 1 is a block diagram of a conventional analog television;
Figure 2 is a block diagram of a conventional digital television;
Figure 3 is a schematic diagram of the conventional analog television with STB;
Figure 4 is a schematic diagram of a digital television having a conventional analog video mode;
Figure 5 is a block diagram of a receiver having analog and digital video modes according to a first embodiment of the present invention;
Figure 6 is a detail view of the memory controller shown in Figure 5;
Figure 7 is a block diagram of the receiver having analog and digital video modes according to a second embodiment of the present invention;
Figure 8 is a block diagram of the receiver having analog and digital video modes according to a third embodiment of the present invention;
Figures 9A through 9C are modifications of the third embodiment shown in Figure 8;
Figure 10 is a block diagram of the receiver having analog and digital video modes according to a fourth embodiment of the present invention;
Figure 11 is a detail block diagram of an analog processor shown in Figure 10; and
Figures 12A through 12C are modifications of the fourth embodiment shown in Figure 10.

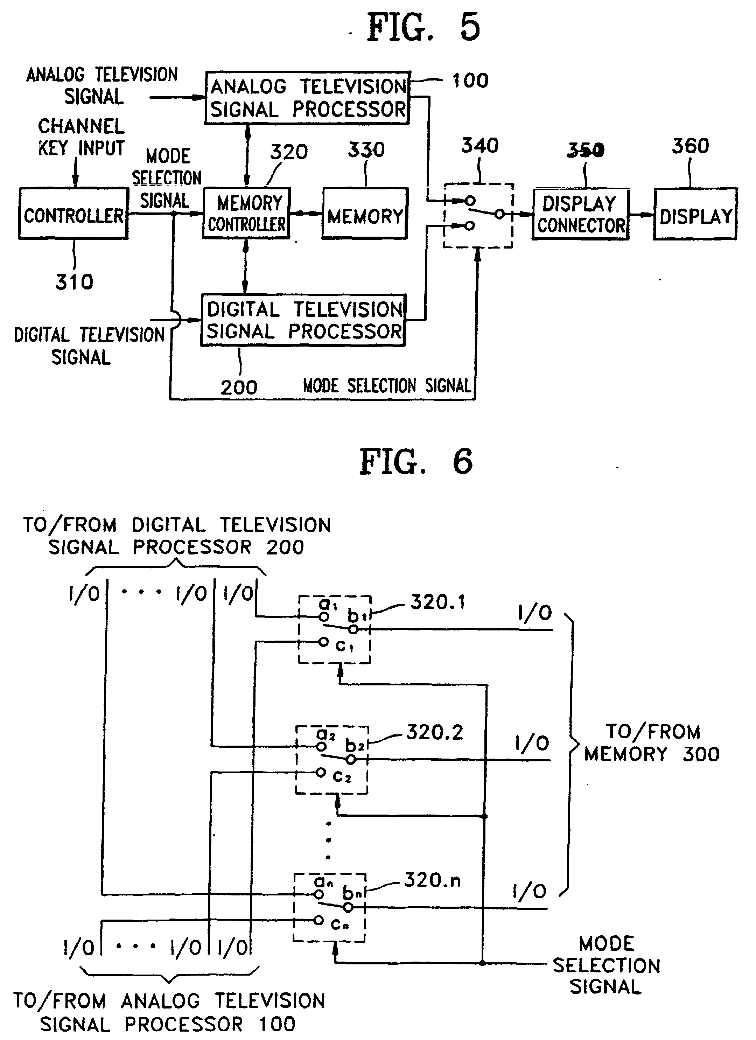

Figure 5 is a block diagram of a receiver having analog and digital video modes according to a first embodiment of the present invention.

Here, as the structure and operation of the analog and digital television signal processors 100 and 200 in Figure 5 are the same as those in Figures 1 and 2, no further description will be given.

Referring to Figure 5, a controller 310 determines whether an input channel key is a television channel processed by a conventional analog method (an analog television channel) or a television channel digital-encoded by MPEG-2 (a digital television channel), and outputs to a memory controller 320 a mode selection signal for either an analog or digital video mode. According to the mode selection signal, memory controller 320 then selects one output among those processed in analog television signal processor 100 and digital television signal processor 200, to store the selected output in a memory 330, or read the data stored in memory 330 to supply the data to either analog television signal processor 100 or digital television signal processor 200.

Here, in the analog video mode signal processed in analog television signal processor 100 is displayed on a display 360 through a multiplexer 340 and a display connector 360, and in the digital video mode signal processed in digital television signal processor 200 is displayed on display 360 through multiplexer 340 and display connector 350.

Here, multiplexer 340 supplies video signal selected according to a mode selection signal output from controller 310 to display connector 350.

In the analog video mode, memory 330 is used as the frame memory (or a field memory) for the Y/C separation and post-processing as described referring to Figure 1. In the digital video service mode, on the other hand, memory 330 is used as the VBV buffer for converting the transmission rate and as the frame buffer for motion compensation, as described referring to Figure 2.

Figure 6 is a detail view of the memory controller 320 shown in Figure 5.
Referring to Figure 6, input and output lines include a data line for reading or writing data to and from memory 330, an address line and a memory control line such as an enable. Here, memory controller 320 includes a plurality of multiplexers 320.1-320.n for switching, wherein first input terminals a1-an of each multiplexer are respectively connected to the input/output (I/O) lines of digital television signal processor 200, second input terminals cl-cn are respectively connected to the I/O lines of analog television signal processor 100, and fixed terminals b₁-bₙ are respectively connect to the I/O lines of memory 330.

Accordingly, input and output lines of memory 330 are connected to input and output lines of digital television signal processor 200 when the mode selection signal indicates the analog video mode, in order to use memory 330 as a frame buffer for Y/C separation and post-processing. Conversely, input and output lines of memory 330 are connected to input and output lines of digital television signal processor 200 when the mode selection signal indicates the digital video mode, in order to use memory 330 as the VBV buffer for converting transmission rate and as the frame buffer for motion compensation.

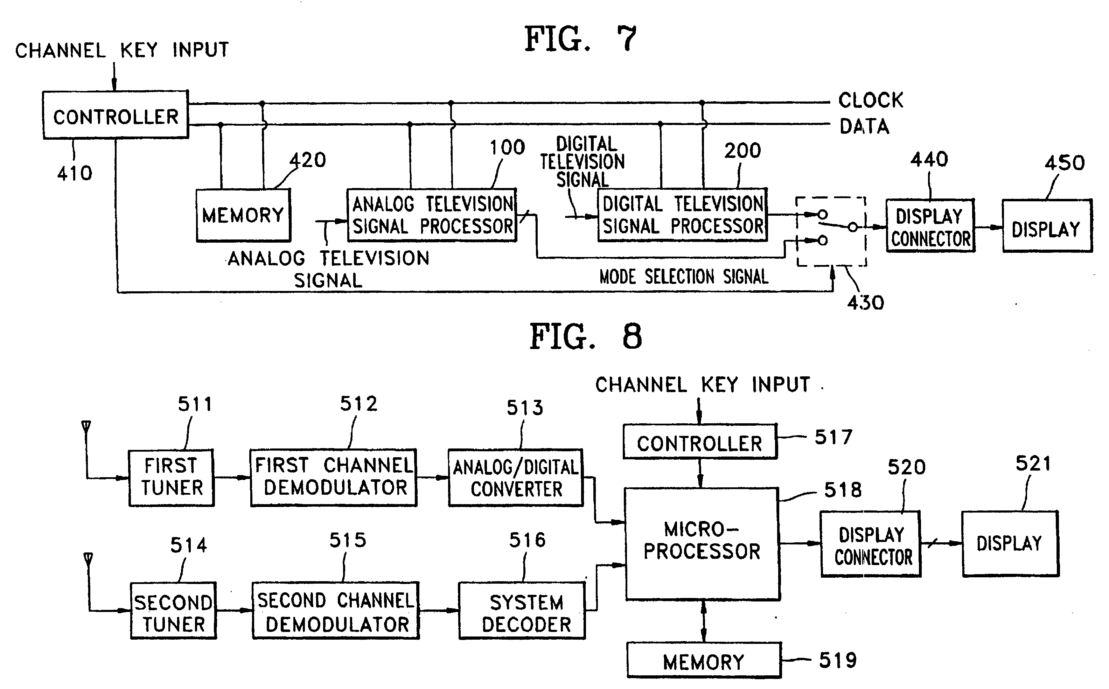

Meanwhile, in Figure 7, a receiver sharing a memory for both analog and digital modes using a bus-control method, is shown.

In the bus-control method, function control portions are connected to a controller (microcomputer) through two common bus lines, i.e., data and clock lines, which allow bi-directional data transmission and are connected to one or more data output terminals and a clock output terminal of the controller. When the controller transmits an address and data over the bus lines and the transmitted address corresponds to that of a given function control unit, the address function control unit is operated in accordance with the transmitted data. Accordingly, the bus-control method reduces the burden of the controller and decreases signal-processing time.

Referring to Figure 7, a controller 410 determines whether an input channel key is an analog television channel or a digital television channel. When the selected channel is an analog television channel, controller 410 transmits the corresponding mode selection data via the data line to analog television signal processor 100 and a memory 420 in order to operate analog television signal processor 100 and memory 420, and when the selected channel is a digital television channel, controller 410 transmits the corresponding mode selection data via the data line to digital television signal processor 200 and memory 420 in order to operate digital television signal processor 200 and memory 420.

Memory 420 is used as the frame memory for the Y/C separation and post-processing when the analog video mode is selected, where current frame data processed in analog television signal processor 100 is written in memory 420 through data lines, and previous frame data stored in memory 420 is transmitted to analog television signal processor 100 through the data lines. Memory 420 is also used as the VBV buffer for transmission rate conversion and as the frame buffer for motion compensation when the digital video mode is selected, where data processed in digital television signal processor 200 is stored in memory 420 through the data lines, and previous data stored in memory 420 is transmitted to digital television signal processor 200 through the data lines.

Signals processed in analog television signal processor 100 and digital television signal processor 200 according to the mode selection signal output from controller 410, are switched by multiplexer 430 and then displayed on a display 450 through a display connector 440.

Figure 8 is a block diagram of a receiver having analog and digital video modes according to a third embodiment of the present invention. Here, the memory controller carries out the functions of the hardware in Figure 5, that is, the function of selecting analog television signal processor 100 or digital television signal processor 200 according to the mode selection signal, is programmed, and a memory 519 is alternately used for digital video-decoding and analog television signal processing such as Y/C separation and post-processing.

Referring to Figure 8, a first tuner 511 selects only a desired channel signal among analog television channel signals transmitted through an antenna for receiving analog television channels, to output an intermediate frequency signal.

A first channel demodulator 512 amplifies the intermediate frequency signal of the channel selected from the first tuner 511, and outputs a video signal.

An analog-to-digital converter 513 converts the video signal output from first channel demodulator 512 into digital form.

Meanwhile, a second tuner 514 selects a desired channel signal among digital television channel signals coded according to MPEG-2 and transmitted through an antenna for receiving digital television channels. A second channel demodulator 515 outputs the desired digital television channel signal output from second tuner 514 as an MPEG-2 bitstream, and a system decoder 516 extracts only a video data stream from the MPEG-2 bitstream.

A controller 517 determines whether the input channel key is an analog television channel or a digital television channel in order to output a mode selection signal indicating the proper mode, i.e., the analog video mode or the digital video mode.

A microprocessor 518 receives the mode selection signal to select either the output of analog-to-digital converter 513 connected to a first input port or the output of system decoder 516 connected to a second input port. That is, in an analog video mode, microprocessor 518 selects a digitized analog television channel signal output from analog-to-digital converter 513, and then either writes in a memory 519 or reads from memory 519 using the instructions of a predetermined program, to perform Y/C separation and post-processing. Here, memory 519 is used as a frame memory for the Y/C separation and post-processing.

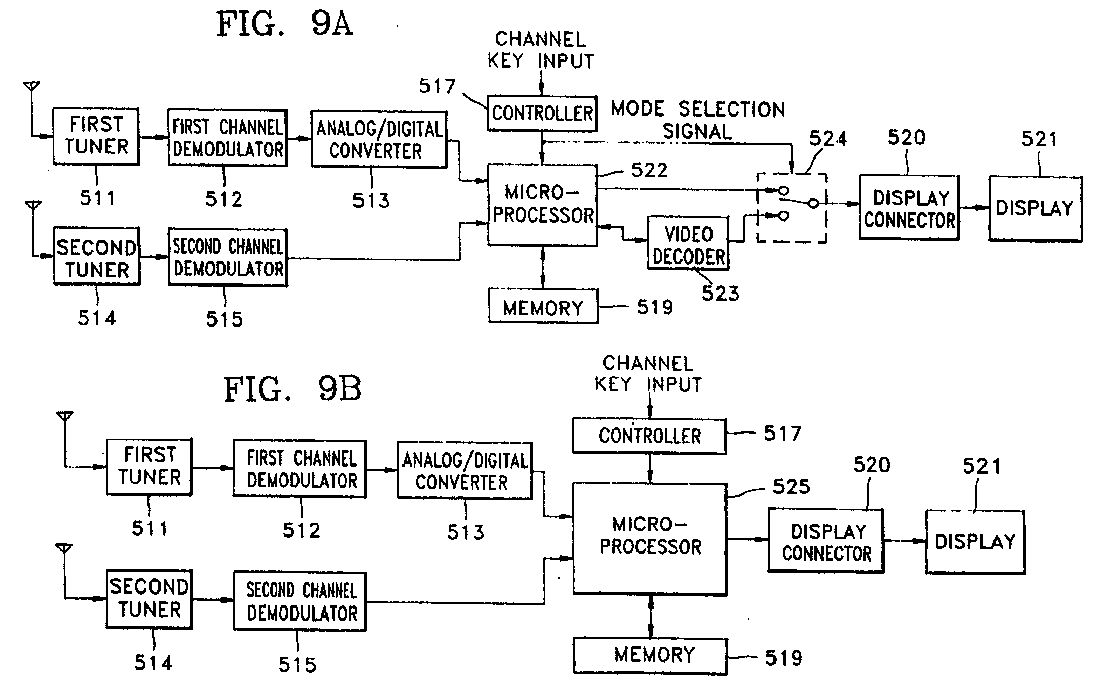

As shown in Figure 8, signals are received using first and second input ports of the microprocessor 518, alternatively, a multiplexer can be connected to a single input port to switch the two inputs in order to use only one input port of the microprocessor 518. The above modifications can be used for embodiments of Figures 9A through 9C, Figure 10 and Figures 12A through 12C.

A display connector 520 converts digital data output from microprocessor 518 into analog form, to display analog R, G and B signals on display 521. The display connector can be called a signal converter.

Here, microprocessor 518 can calculate at a high speed, but specific functions such as an inverse DCT which requires high-speed operation could be realized by hardware.

Figures 9A through 9C are modifications of the third embodiment shown in Figure 8.

A microprocessor 522 shown in Figure 9A, receives a digitized analog television channel signal which is output from analog-to-digital converter 513 in analog video mode, to thereby perform Y/C separation and post-processing using memory 519 as described in Figure 8.

Also, microprocessor 522 receives MPEG-2 bitstream from second channel demodulator 515 in digital video mode and then a video data stream is extracted from MPEG-2 bitstream under control of controller 517 and output to a video decoder 523. Video decoder 523 reconstructs video data stream from the extracted video data stream.

Here, microprocessor 522 provides a memory connection path so that video decoder 523 uses memory 519 as a VBV buffer, a frame buffer and a display buffer.

A multiplexer 524 selects one of digitized analog signal, which are output from microprocessor 522 according to the mode selection signal output from controller 517 and reconstructed data in video decoder 523.

A microprocessor 525 shown in Figure 9B performs Y/C separation and post-processing in analog video mode as described in Figure 9A, and MPEG-2 system decoding and video-decoding in digital video mode. That is, in the case of digital video mode, video data stream is extracted from MPEG-2 bitstream output from second channel demodulator 515 and then video data is reconstructed from the extracted video data stream by microprocessor 525.

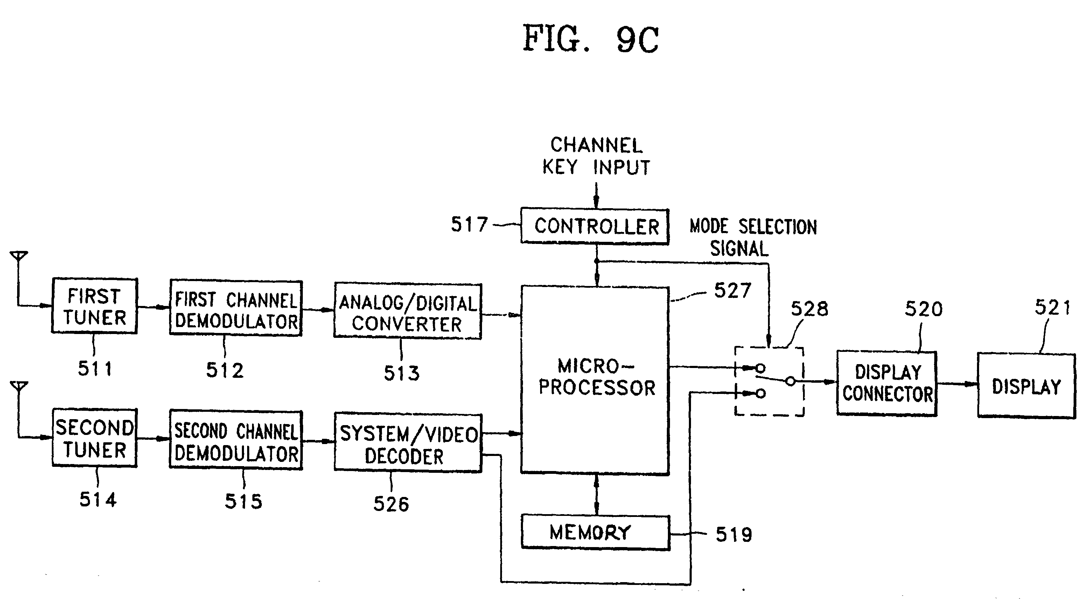

A microprocessor 527 shown in Figure 9C performs memory control function for sharing memory 519 in analog mode and digital video mode and Y/C separation and post-processing in analog mode as described in Figures 9A and 9B.

Meanwhile, in digital video mode, MPEG-2 system decoding and video-decoding are performed by a system and video decoder 526. Also, a multiplexer 528 supplies one of digitized analog signal output from microprocessor 527 according to the mode selection signal of controller 517 and reconstructed video data output from system and video decoder 526, to display connector 520.

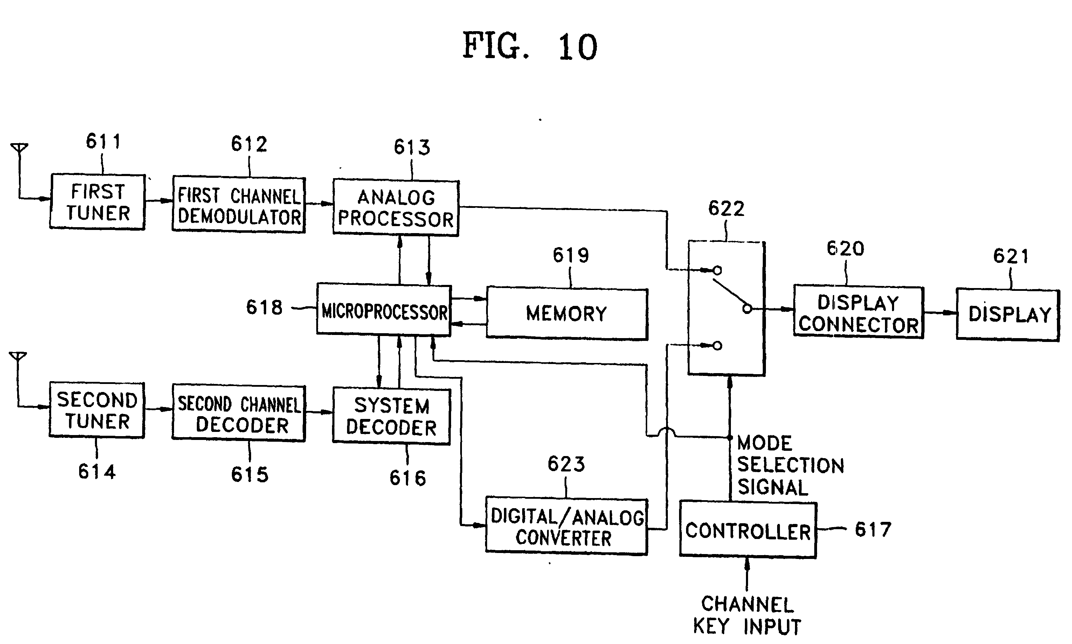

Figure 10 is a block diagram of a receiver having analog and digital video modes according to a fourth embodiment of the present invention. Here, operation of a first tuner 611, a first channel demodulator 612, a second tuner 614, a second channel demodulator 615, a system decoder 616, a display connector 620 and a display 621 is the same as that described in Figure 8.

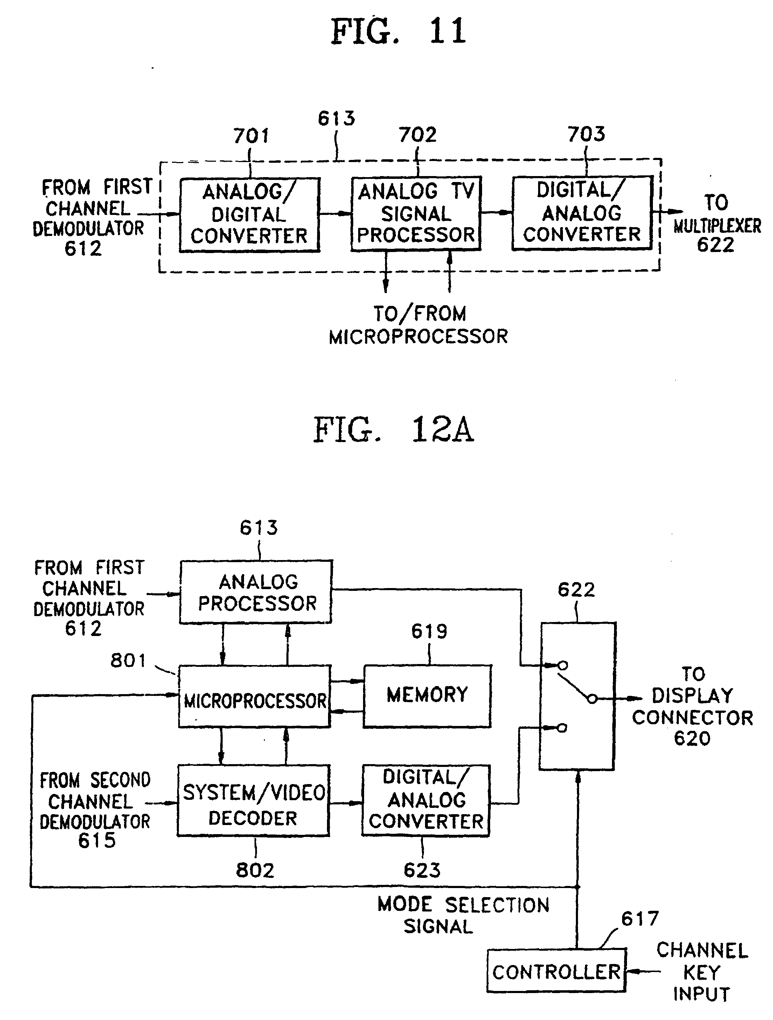

In the third embodiment shown in Figure 8, memory control function is programmed into a microprocessor 618. However, in the fourth embodiment, the analog television signal processing such as three-dimensional Y/C separation or post-processing is performed by an analog processor 613 separated from microprocessor 618. Analog processor 613 is provided with an A/D converter 701, an analog TV signal processor 702 and a D/A converter 703, as shown in Figure 11.

In A/D converter 701, the channel demodulated signal output from first channel demodulator 612 of Figure 10 is converted into digital data. The digital data is then received by an analog TV signal processor 702 and further stored in a memory 619 through microprocessor 618 operated as a memory controller. The analog TV signal stored in memory 619 is used by the analog TV signal processor 702 for Y/C separation or post-processing. The output processed by the analog TV signal processor 702 is temporarily stored in memory 619 until being read out, and is converted into analog signal in D/A converter 703.

Meanwhile, in case of digital video service, MPEG-2 bitstream is decoded into a video data stream in the system decoder 616 and the video data stream is reconstructed to video data by microprocessor 618. The reconstructed data is converted into analog signal by the D/A converter 623.

According to the mode selection signal output from the controller 617 where a mode is determined by a received channel key, a multiplexer 622 selects an analog TV signal processed in the analog processor 613 or an analog video signal output from the D/A converter 623.

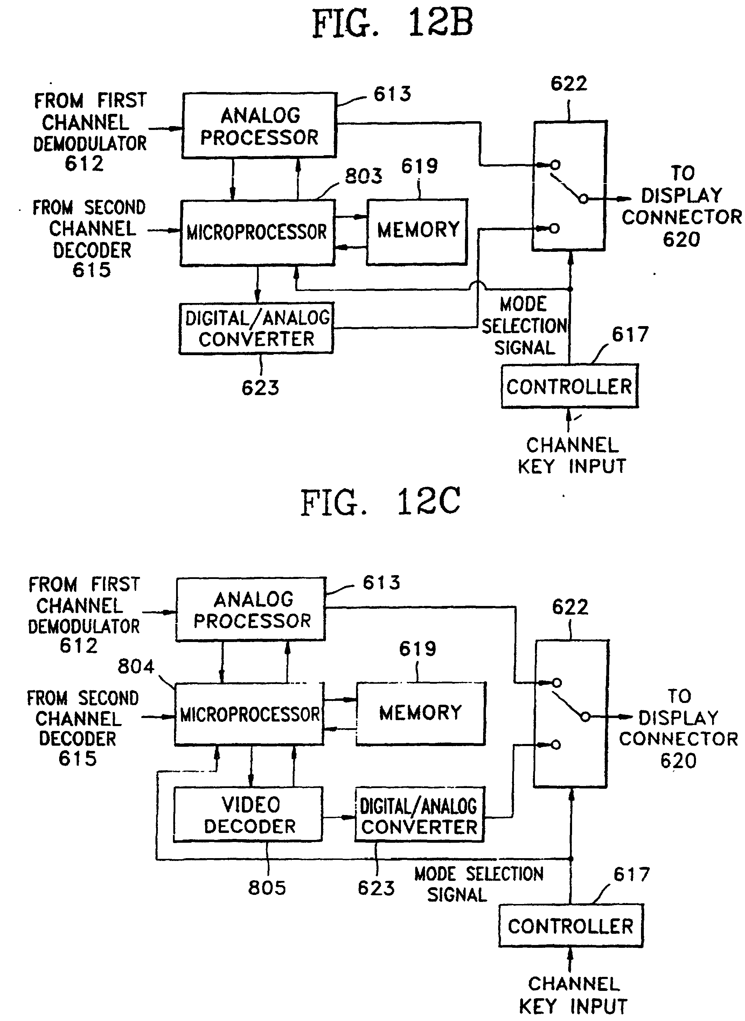

Here, display connector 620 of Figure 10 receives data converted into analog signal and then converts the data into R, G and B signals, to thereby output the R, G and B signals to display 621. In a modification thereof, display connector 620 can be realized by uniting one of components of analog processor 613, i.e., a digital-to-analog converter 703 and digital-to-analog converter 623. Here, the multiplexer 622 converts received digital signals into analog signals, and then outputs analog R, G and B signals into display 621. The above modification is applied to Figures 12A, 12B and 12C.

Meanwhile, the embodiment of Figure 10 can be slightly modified depending on the extent of implementing MPEG decoding by software using the microprocessor 618.

Figures 12A through 12C are modifications of the fourth embodiment shown in Figure 10, where functionally identical portions are given by the same reference numerals as those of Figure 10.

The microprocessor 801 shown in Figure 12A performs only control of the memory 619. The MPEG-2 bitstream decoding and video data stream decoding are performed by a system and video decoder 802 in the outside of the microprocessor 801.

A microprocessor 803 shown in Figure 12B performs both MPEG-2 bitstream decoding and video data stream decoding.

A microprocessor 804 shown in Figure 12C performs MPEG-2 bitstream decoding. However, video data stream decoding is performed by a video decoder 805 external to the microprocessor 804.

According to embodiments of the present invention, when a receiver for receiving both analog video service and digital video service processes a received analog television channel, a large-capacity memory (as that for digital video decoding) is commonly used as a memory for processing an analog television signal, so that memory efficiency is enhanced and system cost is lower.

## Claims

1. A receiver having an analog video mode for receiving television signals analog-processed by a predetermined analog broadcasting method and a digital video mode for receiving television signals digital-processed by a predetermined digital signal format, the receiver comprising:
first signal processing means (100), for processing the received analog television signals; and
second signal processing means (200), for decoding the received digital television signal; the receiver being **characterised in** further comprising:
a memory (330) for storing data in order to decode the digital TV signal in said second signal processing means (220) and process digitized analog television signal in said first signal processing means (100);
generating means (310), for generating a mode selection signal which represents either said analog video mode or said digital video mode; and
a memory controller (320), for controlling said memory (330) according to said mode selection signal in order to write/read the signal processed in said first signal processing means (100), to/from said memory (330), during said analog video mode and write/read the digital TV signal to/from said memory during said digital video mode.

2. A receiver according to claim 1, wherein said first signal processing means (100), comprises:
a first tuner (511), for selecting a desired channel among received analog television channels, to output an intermediate frequency signal of said selected channel;
a first channel demodulator (512) for amplifying and demodulating said intermediate frequency signal of the channel selected by said first tuner (511), to output a video signal; and
a luminance/chrominance separator for separating the luminance (Y) signal and the chrominance signal (C) from video signals output from said first channel demodulator (512), using a correlation between adjacent pictures stored in said memory (330, 519) and/or between adjacent lines stored in said memory.

3. A receiver according to claim 2, further comprising a post-processor for post-processing using said separated luminance signal for enhancing picture quality.

4. A receiver according to claim 1, wherein said memory controller (320) includes switching means (320.1-320.n) for selecting one of the outputs from said first and second signal processing means (100, 200) according to said mode selection signal to write in said memory (330) and supply data stored in said memory (330) to said selected signal processing means.

5. A receiver according to claim 4, wherein said switching means includes at least one multiplexer.

6. A receiver according to claim 1, further comprising:
switching means (340, 430, 524, 528, 622) for selecting one of the output signals from said first signal processing means (100, 511-13, 611-13) and said second signal processing means (200, 514-16, 614-16) according to said mode selection signal; and
display controlling means (350, 440, 520, 620) for displaying the signal selected by said switching means on a display (360, 450, 521, 621).

7. A receiver according to claim 1, wherein the generating means and the memory controller are connected to common bus lines having a data line or multiple of data lines and a clock line for generating mode selection data which represents either said analog video mode or said digital video mode wherein first signal processing means is connected to said common bus lines, for signal-processing the analog television signal received according to the mode selection data, second signal processing means is connected to said common bus lines, for decoding the digital television signal received according to the mode selection data and a memory is connected to said common bus lines, for decoding the digital television signal from said second signal processing means, storing data processed in said first signal processing means according to said mode selection data for representing analog video service mode, and supplying the stored data to said first signal processing means.

8. A receiver according to claim 7, wherein said first signal processing means comprises:
a first tuner for selecting a desired channel among received analog television channels, to output an intermediate frequency signal;
a first channel demodulator for amplifying and demodulating said intermediate frequency signal of the channel selected by said first tuner to output a video signal; and
a luminance/chrominance separator for separating video signal output from said first channel demodulator into luminance (Y) signal and chrominance (C) signal using correlation between adjacent pictures stored in said memory and between adjacent lines stored in said memory.

9. A receiver according to claim 8, further comprising a post-processor for post-processing said separated luminance signal for enhancing picture quality.

10. A receiver according to claim 2 or claim 8, wherein, in said analog video mode, said memory is used as a frame memory for storing data output from said first channel demodulator in a picture unit.

11. A receiver according to claim 3 or 9, wherein, in said analog video mode, said memory is used as a frame memory for storing data output from said first channel demodulator in a picture unit and data input from said post-processor in a picture unit.

12. A receiver according to claim 1 or 7, wherein said first signal processing means comprises:
a first tuner for selecting a desired channel among received analog television channels, to output an intermediate frequency signal;
a first channel demodulator for amplifying and demodulating said intermediate frequency signal of the channel selected by said first tuner and outputting a video signal; and
a post-processor for post-processing using video signal output from said first channel demodulator and data stored in said memory.

13. A receiver according to claim 12, wherein, in said analog video mode, said memory is used as a frame memory for storing data output from said first channel demodulator in a picture unit.

14. A receiver according to claim 1 or 7, wherein said second signal processing means comprises:
a second tuner for selecting a desired channel signal among received television signals coded by the digital signal format;
a second channel demodulator for channel-decoding the desired channel signal output from said second tuner;
a system decoder for outputting a video data stream from the channel-decoded signal output from said second channel demodulator; and
a video decoder for reconstructing video data from said video data stream.

15. A receiver according to claim 14, wherein, in said digital video mode, said memory is used as a channel buffer for converting the transmission rate of a constant bit rate into a variable bit rate for video-decoding and as a frame buffer for motion compensation.

16. A receiver according to claim 7, further comprising:
switching means for selecting one of the output signals from said first signal processing means and said second signal processing means according to said mode selection data; and
display control means for displaying the signal selected by said switching means on display.

17. A receiver according to claim 1, further comprising:
a first input terminal for receiving digitized analog television signal; and
a second input terminal for receiving channel-decoded digital television signal; and wherein
the memory for storing data stores data in order to video-decode said channel-decoded digital television signal; and still further comprising:
a microprocessor for processing one of the signals input into said first and second input terminals according to said mode selection signal, and for controlling said memory so that said memory is shared by writing/reading the digitized analog signal which is input into said first input terminal to/from said memory in said analog video mode; and
display controlling means for controlling the signal processed by said microprocessor so as to display the signal on a display.

18. A receiver according to claim 17, further comprising a system decoder for extracting video data stream from channel-decoded digital television signal input into said second input terminal.

19. A receiver according to claim 18, wherein said microprocessor performs luminance/chrominance separation of the digitized analog television signal input into said first input terminal, in said analog video mode, and reconstructing digital video signal from the video data stream output from said system decoder, in said digital video mode.

20. A receiver according to claim 17, wherein said microprocessor performs luminance/chrominance separating the digitized analog television signal which is input into said first input terminal, in said analog video mode, and performs system decoding, in said digital video mode, to thereby extract video data stream from the channel-decoded digital television signal input into said second input terminal.

21. A receiver according to claim 20, further comprising a video decoder for reconstructing digital video signal from the video data stream output from said microprocessor.

22. A receiver according to claim 17, wherein said microprocessor performs luminance/chrominance separation of the digitized analog television signal input into said first input terminal in said analog video mode, and extracts video data stream from the channel-decoded digital television signals input into said second input terminal, and reconstructs digital video signal from the extracted video data stream in said digital video mode.

23. A receiver according to claim 17, further comprising a system and video decoder for extracting a video data stream from the channel-decoded digital television signal input into said second input terminal and reconstructing digital video signal from the extracted video data stream.

24. A receiver according to claim 23, wherein said microprocessor performs luminance/chrominance separation of the digitized analog television signals input into said first input terminal, in said analog video mode, and writes and reads said digital television signal to and from said memory for system-decoding and video-decoding, in said digital video mode.

25. A receiver according to claim 19, wherein said microprocessor performs post-processing using separated luminance signal.

26. A receiver according to claim 19, wherein said memory is used as a frame memory for luminance/chrominance separation of the digitized analog television signal, in said analog video mode.

27. A receiver according to claim 25, wherein said memory is used as a frame memory for luminance/chrominance separation and post-processing, in said analog video mode.

28. A receiver according to claim 19, wherein said memory is used as a channel buffer for converting the transmission rate of a constant bit rate into a variable bit rate, as a frame buffer for motion compensation, and as a display buffer.

29. A receiver according to claim 18, wherein said microprocessor post-processes digitized analog television signal input into said first input terminal, in said analog video mode, and reconstructs digital video signal output from said system decoder, in said digital video mode.

30. A receiver according to claim 17, wherein said microprocessor performs post-processing of the digitized analog television signal input into said first input terminal, in said analog video mode, and system-decoding of the channel-decoded digital television signal input into said second input terminal, in said digital video mode, to thereby extract video data stream.

31. A receiver according to claim 30, wherein said microprocessor further comprises a video decoder for reconstructing said video data stream from said digital video signal.

32. A receiver according to claim 17, wherein said microprocessor performs post-processing of the digitized analog television signal input into said first input terminal, in said analog video mode, and system-decoding of the channel-decoded digital television signal input into said second input terminal, in said digital video mode, to thereby extract video data stream, and reconstructs digital video signal from the extracted video data stream.

33. A receiver according to claim 17, further comprising a system and video decoder for extracting video data stream from channel-decoded digital television signal input into said second input terminal and reconstructing video data from the extracted video data stream.

34. A receiver according to claim 33, wherein said microprocessor performs post-processing of the digitized analog television signal input into said first input terminal, in said analog video mode, and writes and reads said digital television signal to and from said memory for system-decoding and video-decoding, in said digital video mode.

35. A receiver according to claim 29, wherein said memory is used as a frame memory for post-processing, in said analog video mode.

36. A receiver according to claim 29, wherein said memory is used as a channel buffer for converting the transmission rate of a constant bit rate into a variable bit rate, as a frame buffer for motion compensation, and as a display buffer, in said digital video mode.

37. A receiver according to claim 1, further comprising:
a first input terminal for receiving a channel-demodulated analog TV signal;
a second input terminal for receiving a channel-decoded digital TV signal; and wherein
the memory for storing data stores data either in a process of source-decoding said channel-decoded digital television signal or in a process of processing said channel-demodulated analog television signal; and still further comprising:
a microprocessor for writing/reading said digital television signal during said digital video mode or said digitized analog television signal during said analog video mode, to and from said memory according to said mode selection signal;
analog processing means having an input terminal for receiving said channel-demodulated analog television signal, an input terminal for receiving data read from said memory through said microprocessor, an output terminal for outputting data to said microprocessor to store said data into said memory and an output terminal for outputting processed analog television signal;
digital processing means having an input terminal for receiving said channel-decoded digital television signal, input and output terminals connected to said microprocessor, and a terminal for outputting said video signal reconstructed from said channel-decoded digital television signal;
switching means for selecting one of said reconstructed digital video signal and said processed analog television signal according to said mode selection signal; and
display controlling means for controlling the signal output from said switching means to display the signal on a display.

38. A receiver according to claim 37, wherein said digital processing means extracts video data stream from said channel-decoded digital television signal by system decoding, and reconstructs digital video signal from said extracted video data stream.

39. A receiver according to claim 37, wherein said digital processing means extracts video data stream from said channel-decoded digital television signal, reconstructs digital video signal from said extracted video data stream, and converts said reconstructed digital video signal into analog video signal.

40. A receiver according to claim 37, wherein said memory is used as a channel buffer for converting the transmission rate of a constant bit rate into a variable bit rate, as a frame buffer for motion compensation, and as a display buffer, in said digital mode.

41. A receiver according to claim 37, wherein said analog processing means performs luminance/chrominance separation of said channel-demodulated analog television signal.

42. A receiver according to claim 41, wherein, in said analog video mode, said memory is used as a frame memory for luminance/chrominance separation of said channel-demodulated analog television signal.

43. A receiver according to claim 1, further comprising:
a first input terminal for receiving a channel-demodulated analog TV signal;
a second input terminal for receiving a channel-decoded digital TV signal; and wherein
the memory for storing data stores data in a process of either video-decoding of said channel-decoded digital television signal or in a process of processing said channel-demodulated analog television signal; and still further comprising:
a microprocessor having an input terminal for receiving said channel-decoded digital television signal, reconstructing digital video signal from said digital television signal in said digital video mode and for writing/reading said digital television signal during said digital video mode or said digitized analog television signal during said analog video mode, to and from said memory according to said mode selection signal;
analog processing means having an input terminal for receiving said channel-demodulated analog television signal, an input terminal for receiving data read from said memory through said microprocessor, an output terminal for outputting data to said microprocessor to store said data into said memory and an output terminal for outputting processed analog television signal;
digital processing means for converting said reconstructed digital video signal output from said microprocessor into analog signal;
switching means for selecting one of said reconstructed digital video signal from said microprocessor and said processed analog television signal; and
display controlling means for controlling the signal output from said switching means to display the signal on a display.

44. A receiver according to claim 43, wherein said microprocessor multiplexes said channel-decoded digital television signal, extracts video data stream from said channel-decoded digital television signal by system-decoding, and reconstructs said digital video signal from said extracted video data stream.

45. A receiver according to claim 43, further comprising a digital processing means for converting reconstructed digital video signal output from said microprocessor into analog signals and then supplying the converted analog signal to said switching means.

46. A receiver according to claim 43, wherein said display controlling means converts said switched signal into analog signal.

47. A receiver according to claim 44, wherein said memory is used as a buffer for temporarily storing said channel-demodulated analog television signal, as a channel buffer for converting the transmission rate of a constant bit rate into a variable bit rate, as a frame buffer for motion compensation, and as a display buffer.

48. A receiver according to claim 1, further comprising:
a first input terminal for receiving a channel-demodulated analog TV signal;
a second input terminal for receiving a channel-decoded digital TV signal; and wherein
the memory for storing data stores data either in a process of source-decoding said channel-decoded digital television signal or in a process of processing channel-demodulated said analog television signal; and still further comprising:
a microprocessor having an input terminal for receiving said channel-decoded digital television signal, extracting video data stream from said channel-decoded digital television signal in said digital video mode, and for writing/reading said digital television signal during said digital video mode or said digitized analog television signal during said analog video mode, to/from said memory according to said mode selection signal;
analog processing means having an input terminal for receiving said channel-demodulated analog television signal, an input terminal for receiving data read from said memory through said microprocessor, an output terminal for outputting data to said microprocessor to store said data into said memory, and an output terminal for outputting processed analog television signal;
digital processing means for reconstructing digital video signal from said video data stream;
switching means for selecting one of output signal of said digital processing means and said processed analog TV signal; and
display controlling means for controlling the signal output from said switching means to display the signal on a display.

49. A receiver according to claim 48, wherein said microprocessor multiplexes said channel-decoded digital television signal and extracts video data stream from said channel-decoded digital television signal.

50. A receiver according to claim 48, wherein said digital processing means converts reconstructed digital video signals into analog signal.

51. A receiver according to claim 48, wherein said display controlling means converts the signal switched in said switching means into analog signal.

52. A receiver according to claim 49, wherein said memory is used as a buffer for temporarily storing said channel-demodulated analog television signal, as a channel buffer for converting a transmission rate of a constant bit rate into a variable bit rate, as a frame buffer for motion compensation, and as a display buffer, in said digital video mode.

53. A receiver according to claim 43 or 48, wherein said analog processing means performs luminance/chrominance separation of said channel-demodulated analog television signal.

54. A receiver according to claim 53, wherein said memory is used as a frame memory for luminance/chrominance separation of said channel-demodulated analog television signal, in said analog video mode.

55. A receiver according to claim 37, 43 or 48, wherein said analog processing means performs post-processing of said channel-demodulated analog television signal.

56. A receiver according to claim 55, wherein said memory is used as a frame memory for post-processing of said channel-demodulated analog television signal, in said analog video mode.

57. A receiver according to claim 37, 43 or 48, wherein said analog processing means performs luminance/chrominance separation and post-processing of said channel-demodulated analog television signal.

58. A receiver according to claim 57, wherein said memory is used as a frame memory for luminance/chrominance separation and post-processing of said channel-demodulated analog television signal, in said analog video mode.

59. A receiver according to claim 1, further comprising:
a first input terminal for receiving a channel-demodulated analog TV signal;
a second input terminal for receiving a channel-decoded digital TV signal; and wherein
the memory for storing data stores data in a process of either source-decoding said channel-decoded digital television signal or processing channel-demodulated said analog television signal; and still further comprising:
digital processing means including an input terminal for receiving said channel-decoded digital television signal and for extracting video data stream from said channel-decoded digital television;
a microprocessor for inputting video data stream extracted from said digital processing means, thereby reconstructing digital video signal, and writing and reading digitized analog television signal to/from said memory in analog video mode;
analog processing means having an input terminal for receiving said channel-demodulated analog television signal, an input terminal for receiving data read from said memory through said microprocessor, an output terminal for outputting data to said microprocessor to store said data into said memory, and an output terminal for outputting processed analog television signal;
switching means for selecting one of output signal of said digital processing means and said processed analog TV signal; and
display controlling means for controlling the signal output from said switching means to display the signal on a display.

60. A receiver according to claim 59, further comprising converting means for converting digital video signal reconstructed in said microprocessor into analog signal and then supplying the converted analog signal to said switching means, where the signal output from said analog processing means is an analog signal.

61. A receiver according to claim 59, wherein said display controlling means converts the signal switched in said switching means into analog signal, where the switched signal is a digital signal.

62. A receiver according to claim 59, wherein said memory is used as a channel buffer for converting a transmission rate of a constant bit rate into a variable bit rate, as a frame buffer for motion compensation, and as a display buffer, in said digital video mode.

63. A converter according to claim 59, wherein said analog processing means performs luminance/chrominance separation of said channel-demodulated analog television signal.

64. A receiver according to claim 63, wherein said memory is used as a frame memory for luminance/chrominance separation of said channel-demodulated analog television signal, in said analog video mode.

65. A receiver according to claim 59, wherein said analog processing means performs post-processing of said channel-demodulated analog television signals.

66. A receiver according to claim 65, wherein said memory is used as a frame memory for post-processing of said channel-demodulated analog television signal, in said analog video mode.

67. A receiver according to claim 59, wherein said analog processing means performs luminance/chrominance separation and post-processing said channel demodulated analog television signal.

68. A receiver according to claim 67, wherein said memory is used as a frame memory for luminance/chrominance separation and post-processing of said channel-demodulated analog television signal, in said analog video mode.

69. A method for receiving television signal analog-processed according to a predetermined analog broadcasting method and television signal digital-processed by a predetermined digital signal format, comprising the steps of:
(a) generating a mode selection signal to determine whether a channel selected by a user is a television channel of an analog video mode or a television channel of a digital video mode;
(b) according to said mode selection signal, either storing received digital television signal in a memory and decoding the data stored in said memory in said digital video mode, or storing received analog television signal in said memory for reading the data stored in said memory to process the data in said memory in said analog video mode.

## Patentansprüche

1. Empfänger mit einer analogen Videobetriebsart zum Empfangen von Fernsehsignalen, die durch ein vorbestimmtes analoge Sendeverarbeitung analog verarbeitet sind, und mit einer digitalen Videobetriebsart zum Empfangen von Fernsehsignalen, die mittels eines vorbestimmten digitalen Signalformates digital verarbeitet sind, wobei der Empfänger umfaßt:
eine erste Signalverarbeitungseinrichtung (100) zum Verarbeiten der empfangenen analogen Fernsehsignale; und
eine zweite Signalverarbeitungseinrichtung (200) zum Decodieren der empfangenen digitalen Fernsehsignale; wobei der Empfänger **dadurch gekennzeichnet ist, daß** er ferner umfaßt:
einen Speicher (330) zum Speichern von Daten, um das digitale TV-Signal in der zweiten Signalverarbeitungseinrichtung (200) zu decodieren und das digitalisierte analoge Fernsehsignal in der ersten Signalverarbeitungseinrichtung (100) zu verarbeiten;
eine Erzeugungseinrichtung (310) zum Erzeugen eines Betriebsart-Auswahlsignals, welches entweder die analoge Videobetriebsart oder die digitale Videobetriebsart repräsentiert; und
eine Speichersteuerung (320) zum Steuern des Speichers (330) gemäß dem Betriebsart-Auswahlsignal, um das in der ersten Signalverarbeitungseinrichtung (100) verarbeitete Signal in den Speicher (330) während des analogen Videobetriebsart zu schreiben bzw. daraus zu lesen, und das digitale TV-Signal in den Speicher während des digitalen Videobetriebsart zu schreiben bzw. daraus zu lesen.

2. Empfänger nach Anspruch 1, wobei die erste Signalverarbeitungseinrichtung (100) umfaßt:
einen ersten Tuner (511) zum Auswählen eines gewünschten Kanals aus empfangenen analogen Fernsehkanälen, um ein Zwischenfrequenzsignal des ausgewählten Kanals auszugeben;
einen ersten Kanaldemodulator (512), zum Verstärken und Demodulieren des Zwischenfrequenzsignals des von dem ersten Tuner (511) ausgewählten Kanal, um ein Videosignal auszugeben; und
eine Luminanz (Helligkeit)/Chrominanz (Farbwert)-Trenneinrichtung zum Abtrennen des Luminanz-(Y)-Signals und des Chrominanz-(C)-Signals aus den von dem ersten Kanaldemodulator (512) ausgegebenen Videosignalen unter Verwendung einer Korrelation zwischen benachbarten Bildern, die in dem Speicher (330, 519) gespeichert werden und/oder zwischen in dem Speicher gespeicherten benachbarten Zeilen.

3. Empfänger nach Anspruch 2, welcher femer einen Nachprozessor für die Nachverarbeitung unter Verwendung eines abgetrennten Luminanzsignals zur Verbesserung der Bildqualität umfaßt.

4. Empfänger nach Anspruch 1, wobei die Speichersteuerung (320) eine Umschalteinrichtung (320.1 - 320.n) für die Auswahl von einem der Ausgangssignale aus den ersten und zweiten Signalverarbeitungseinrichtungen (100, 200) gemäß dem Betriebsart-Auswahlsignal enthält, um in dem Speicher (330) zu schreiben und in dem Speicher (330) gespeicherte Daten an die ausgewählte Signalverarbeitungseinrichtung zu liefern.

5. Empfänger nach Anspruch 4, wobei die Umschalteinrichtung wenigstens einen Multiplexer enthält.

6. Empfänger nach Anspruch 1, welcher femer umfaßt:
eine Umschalteinrichtung (340, 430, 524, 528, 622) zum Auswählen eines von den Ausgangssignalen aus der ersten Signalverarbeitungseinrichtung (100, 511-13, 611-13) und der zweiten Signalverarbeitungseinrichtung (200, 514-16, 614-16) gemäß dem Betriebsart-Auswahlsignal; und eine Anzeigesteuereinrichtung (350, 440, 520, 620) zum Anzeigen des von der Umschalteinrichtung ausgewählten Signals auf einer Anzeigeeinrichtung (360, 450, 521, 621).

7. Empfänger nach Anspruch 1, wobei die Erzeugungseinrichtung und die Speichersteuerung mit gemeinsamen Busleitungen mit einer Datenleitung oder mehreren Datenleitungen und einer Taktleitung zum Erzeugen von Betriebsart-Auswahldaten welche entweder die analogen Videobetriebsart oder die digitalen Videobetriebsart repräsentieren, verbunden sind, wobei die erste Signalverarbeitungseinrichtung mit den gemeinsamen Busleitungen zur Signalverarbeitung des analogen Fernsehsignals verbunden ist, das gemäß den Betriebsart-Auswahldaten empfangen wird, die zweite Signalverarbeitungseinrichtung mit den gemeinsamen Busleitungen verbunden ist, um das digitale Fernsehsignal zu decodieren, das gemäß den Betriebsart-Auswahldaten empfangen wird, und ein Speicher mit den gemeinsamen Busleitungen verbunden ist, um das digitale Fernsehsignal aus der zweiten Signalverarbeitungseinrichtung zu decodieren, die in der ersten Signalverarbeitungseinrichtung gemäß den Betriebsart-Auswahldaten verarbeiteten Daten zu speichern, um die analoge Videobetriebsart zu repräsentieren, und um die gespeicherten Daten an die erste Signalverarbeitungseinrichtung zu liefern.

8. Empfänger nach Anspruch 7, wobei die erste Signalverarbeitungseinrichtung umfaßt:
einen ersten Tuner zum Auswählen eines gewünschten Kanals von empfangenen analogen Fernsehkanälen, um ein Zwischenfrequenzsignal auszugeben;
einen ersten Kanaldemodulator zum Verstärken und Demodulieren des Zwischenfrequenzsignals des vom ersten Tuner ausgewählten Kanals, um ein Videosignal auszugeben.

9. Empfänger nach Anspruch 8, welcher ferner einen Nachprozessor für die Nachverarbeitung des abgetrennten Luminanzsignals zur Verbesserung der Bildqualität umfaßt.

10. Empfänger nach Anspruch 2 oder Anspruch 8, wobei in der analogen Videobetriebsart der Speicher als ein Rahmenspeicher zum Speichern von Daten verwendet wird, die von dem ersten Kanaldemodulator in einer Bildeinheit ausgegeben werden.

11. Empfänger nach Anspruch 3 oder 9, wobei in der analogen Videobetriebsart der Speicher als ein Rahmenspeicher zum Speichern von Daten verwendet wird, die von dem ersten Kanaldemodulator in einer Bildeinheit ausgegeben werden, und von Daten, die von dem Nachprozessor in einer Bildeinheit eingegeben werden.

12. Empfänger nach Anspruch 1 oder 7, wobei die erste Signalverarbeitungseinrichtung umfaßt:
einen ersten Tuner zum Auswählen eines gewünschten Kanals aus empfangenen analogen Fernsehkanälen, um ein Zwischenfrequenzsignal des ausgewählten Kanals auszugeben;
einen ersten Kanaldemodulator zum Verstärken und Demodulieren des Zwischenfrequenzsignals des von dem ersten Tuner ausgewählten Kanals, und zum Ausgeben eines Videosignals; und
einen Nachprozessor zum Nachverarbeiten unter Verwendung des von dem ersten Kanaldemodulator ausgegebenen Videosignals und in dem Speicher gespeicherter Daten.

13. Empfänger nach Anspruch 12, wobei in der analogen Videobetriebsart der Speicher als ein Rahmenspeicher verwendet wird, um von dem ersten Kanaldemodulator ausgegebene Daten in einer Bildeinheit zu speichern.

14. Empfänger nach Anspruch 1 oder 7, wobei die zweite Signalverarbeitungseinrichtung umfaßt:
einen zweiten Tuner zum Auswählen eines gewünschten Kanalsignals aus empfangenen Fernsehsignalen, die durch das digitale Signalformat codiert sind;
einen zweiten Kanaldemodulator zum Kanal-Decodieren des von dem zweiten Tuner ausgegeben gewünschten Kanalsignals;
einen Systemdecoder zum Ausgeben eines Videodatenstroms aus dem von dem zweiten Kanaldemodulator ausgegebenen Kanal-decodierten Signal; und
einen Videodecoder zum Rekonstruieren von Videodaten aus dem Videodatenstrom.

15. Empfänger nach Anspruch 14, wobei in der digitalen Videobetriebsart der Speicher als ein Kanalpuffer zum Umwandeln der Übertragungsrate mit einer konstanten Bitrate in eine variable Bitrate zur Videodecodierung und als ein Rahmenpuffer zur Bewegungskompensation verwendet wird.

16. Empfänger nach Anspruch 7, ferner umfassend:
eine Umschalteinrichtung zum Auswählen eines von den Ausgangssignalen aus der ersten Signalverarbeitungseinrichtung und der zweiten Signalverarbeitungseinrichtung gemäß den Betriebsart-Auswahldaten; und
eine Anzeigesteuereinrichtung zum Anzeigen des von der Umschalteinrichtung ausgewählten Signals auf einer Anzeigeeinrichtung.

17. Empfänger nach Anspruch 1, ferner umfassend:
einen ersten Eingangsanschluß zum Empfangen eines digitalisierten analogen Fernsehsignals; und
einen zweiten Eingangsanschluß zum Empfangen eines Kanal-decodierten digitalen Fernsehsignals; und wobei
der Speicher zum Speichern von Daten Daten speichert, um eine Videodecodierung des Kanal-decodierten digitalen Fernsehsignals durchzuführen; und ferner umfassend:
einen Mikroprozessor zum Verarbeiten einer von den in die erste und zweite Eingangsanschlüsse gemäß dem Betriebsart-Auswahlsignal eingegebenen Signalen und zum Steuern des Speichers so, daß der Speicher gemeinsam genutzt wird, indem das digitalisierte analoge Signal, welches in den ersten Eingangsanschluß eingegeben wird, in den Speicher in der analogen Videobetriebsart geschrieben bzw. daraus ausgelesen wird; und
eine Anzeigesteuereinrichtung, um das von dem Mikroprozessor verarbeitete Signal so zu steuern, daß das Signal auf einer Anzeigeeinrichtung anzeigt wird.

18. Empfänger nach Anspruch 17, welcher femer einen Systemdecoder zum Extrahieren eines Videodatenstroms aus einem Kanal-decodierten digitalen Fernsehsignal umfaßt, das in den zweiten Eingangsanschluß eingegeben wird.

19. Empfänger nach Anspruch 18, wobei der Mikroprozessor eine Luminanz/Chrominanz-Abtrennung des digitalisierten analogen Fernsehsignals, das in den ersten Eingangsanschluß eingegeben wird, in der analogen Videobetriebsart durchführt, und das digitale Videosignal aus dem Videodatenstrom, der von dem zweiten Systemdecoder ausgegeben wird, in der digitalen Videobetriebsart rekonstruiert.

20. Empfänger nach Anspruch 17, wobei der Mikroprozessor in dem analogen Betriebsart eine Luminanz/Chrominanz-Abtrennung des digitalisierten analogen Fernsehsignals durchführt, das in den ersten Eingangsanschluß eingegeben wird, und eine Systemdecodierung in dem digitalen Videobetriebsart durchführt, um dadurch einen Videodatenstrom aus dem Kanal-decodierten digitalen Fernsehsignal zu extrahieren, das in den zweiten Eingangsanschluß eingegeben wird.

21. Empfänger nach Anspruch 20, welcher femer einen Videodecoder zum Rekonstruieren des digitalen Videosignals aus dem von dem Mikroprozessor ausgegebenen Videostrom umfaßt.

22. Empfänger nach Anspruch 17, wobei der Mikroprozessor eine Luminanz/Chrominanz-Abtrennung des digitalisierten analogen Fernsehsignals, das in den ersten Eingangsanschluß eingegeben wird, in der analogen Betriebsart durchführt, und einen Videodatenstrom aus den Kanal-decodierten digitalen Fernsehsignalen, die in dem zweiten Eingangsanschluß eingegeben werden, extrahiert und ein digitales Videosignal aus dem extrahierten Videodatenstrom in der digitalen Videobetriebsart rekonstruiert.

23. Empfänger nach Anspruch 17, welcher femer einen System- und Videodecoder zum Extrahieren eines Videodatenstroms aus dem in den zweiten Eingangsanschluß eingegebenen Kanal-decodierten digitalen Fernsehsignal und zum Rekonstruieren des digitalen Videosignals aus dem extrahierten Videodatenstrom umfaßt.

24. Empfänger nach Anspruch 23, wobei der Mikroprozessor eine Luminanz/Chrominanz-Abtrennung der in den erstem Eingangsanschluß eingegebenen digitalisierten analogen Fernsehsignale in der ersten analogen Videobetriebsart durchführt und die digitalen Fernsehsignale in den Speicher zur Systemdecodierung und Videodecodierung in der digitalen Videobetriebsart einschreibt und ausliest.

25. Empfänger nach Anspruch 19, wobei der Mikroprozessor eine Nachverarbeitung unter Verwendung eines abgetrennten Luminanzsignals durchführt.

26. Empfänger nach Anspruch 19, wobei der Speicher als ein Rahmenspeicher zur Luminanz/Chrominanz-Abtrennung des digitalisierten analogen Fernsehsignals in der analogen Videobetriebsart verwendet wird.

27. Empfänger nach Anspruch 25, wobei der Speicher als ein Rahmenspeicher zur Luminanz/Chrominanz-Abtrennung und Nachverarbeitung in der analogen Videobetriebsart verwendet wird.

28. Empfänger nach Anspruch 19, wobei der Speicher als ein Kanalpuffer zum Umwandeln der Übertragungsrate von einer konstanten Bitrate in eine variable Bitrate, als ein Rahmenpuffer zur Bewegungskompensation und als ein Anzeigepuffer verwendet wird.

29. Empfänger nach Anspruch 18, wobei der Mikroprozessor das in den ersten Eingangsanschluß eingegebene digitalisierte analoge Fernsehsignal in der analogen Videobetriebsart nachverarbeitet, und das dem Systemdecoder ausgegebene digitale Videosignal in der digitalen Videobetriebsart rekonstruiert.

30. Empfänger nach Anspruch 17, wobei der Mikroprozessor die Nachverarbeitung des in den ersten Eingangsanschluß eingegebenen digitalisierten analogen Fernsehsignals in der analogen Videobetriebsart durchführt, und die Systemdecodierung des in den zweiten Eingangsanschluß eingegebenen Kanal-decodierten digitalen Fernsehsignals in der-digitalen Videobetriebsart durchführt, um dadurch einen Videodatenstrom zu extrahieren.

31. Empfänger nach Anspruch 30, wobei der Mikroprozessor ferner einen Videodecoder zum Rekonstruieren des Videodatenstroms aus dem digitalen Videosignal umfaßt.

32. Empfänger nach Anspruch 17, wobei der Mikroprozessor die Nachverarbeitung des in den ersten Eingangsanschluß eingegebenen digitalisierten analogen Fernsehsignals in der analogen Videobetriebsart durchführt, und die Systemdecodierung des in den zweiten Eingangsanschluß eingegebenen Kanal-decodierten digitalen Fernsehsignals in der digitalen Videobetriebsart, um dadurch einen Videodatenstrom zu extrahieren, und das digitale Videosignal aus dem extrahierten Videodatenstrom rekonstruiert.

33. Empfänger nach Anspruch 17, welcher ferner einen System- und Videodecoder zum Extrahieren eines Videodatenstroms aus dem in den zweiten Eingangsanschluß eingegebenen Kanal-decodierten digitalen Fernsehsignal und zum Rekonstruieren eines Videodatenstroms aus dem extrahierten Videodatenstrom umfaßt.

34. Empfänger nach Anspruch 33, wobei der Mikroprozessor die Nachverarbeitung des in den ersten Eingangsanschluß eingegebenen digitalisierten analogen Fernsehsignals in der analogen Videobetriebsart durchführt, und das digitale Fernsehsignal in den Speicher zur System-Decodierung und Video-Decodierung in der digitalen Videobetriebsart einschreibt und daraus ausliest.

35. Empfänger nach Anspruch 29, wobei der Speicher als ein Rahmenspeicher für die Nachverarbeitung in der analogen Videobetriebsart verwendet wird.

36. Empfänger nach Anspruch 29, wobei der Speicher als ein Kanalpuffer zum Umwandeln der Übertragungsrate mit einer konstanten Bitrate in eine variable Bitrate, als ein Rahmenpuffer zur Bewegungskompensation und als ein Anzeigepuffer in der digitalen Videobetriebsart verwendet wird.

37. Empfänger nach Anspruch 1, ferner umfassend:
einen ersten Eingangsanschluß zum Empfangen eines Kanal-demodulierten analogen TV-Signals;
einen zweiten Eingangsanschluß zum Empfangen eines Kanal-decodierten digitalen TV-Signals; und wobei
der Speicher zum Speichern von Daten Daten entweder in einem Prozeß einer Quellen-Decodierung des Kanal-decodierten digitalen Fernsehsignals oder in einem Prozeß einer Verarbeitung des Kanal-demodulierten analogen Fernsehsignals speichert; und weiter noch umfassend:
einen Mikroprozessor zum Einschreiben/Auslesen des digitalen Fernsehsignals während der digitalen Videobetriebsart, oder des digitalisierten analogen Fernsehsignals während der analogen Videobetriebsart, in den und aus dem Speicher gemäß dem Betriebsart-Auswahlsignal;
eine analoge Verarbeitungseinrichtung mit einem Eingangsanschluß zum Empfangen des Kanal-demodulierten analogen Fernsehsignals, einem Eingangsanschluß zum Empfangen von aus dem Speicher durch den Mikroprozessor ausgelesenen Daten, einem Ausgangsanschluß zum Ausgeben von Daten an den Mikroprozessor, um die Daten in dem Speicher zu speichern, und einem Ausgangsanschluß zum Ausgeben des verarbeiteten analogen Fernsehsignals;
eine digitale Verarbeitungseinrichtung mit einem Eingangsanschluß zum Empfangen des Kanal-decodierten digitalen Fernsehsignals, Eingangs- und Ausgangsanschlüsse, die mit dem Mikroprozessor verbunden sind, und mit einen Anschluß zum Ausgeben des aus dem Kanal-decodierten digitalen Fernsehsignal rekonstruierten Videosignals;
eine Umschalteinrichtung zum Auswählen eines von dem rekonstruierten digitalen Videosignal und dem verarbeiteten analogen Fernsehsignal gemäß dem Betriebsart-Auswahlsignal; und
eine Anzeigesteuereinrichtung zum Steuern des von der Umschalteinrichtung ausgegebenen Signals, um das Signal auf einer Anzeigeeinrichtung anzuzeigen.

38. Empfänger nach Anspruch 37, wobei die digitale Verarbeitungseinrichtung einen Videodatenstrom aus dem Kanal-decodierten digitalen Fernsehsignal durch Systemdecodierung extrahiert, und das digitale Videosignal aus dem extrahierten Videodatenstrom rekonstruiert.

39. Empfänger nach Anspruch 37, wobei die digitale Verarbeitungseinrichtung einen Videodatenstrom aus dem Kanal-decodierten digitalen Fernsehsignal extrahiert, das digitale Videosignal aus dem extrahierten Videodatenstrom rekonstruiert und das rekonstruierte digitale Videosignal in das analoge Videosignal umwandelt.

40. Empfänger nach Anspruch 37, wobei der Speicher als ein Kanalpuffer zum Umwandeln der Übertragungsrate mit einer konstanten Bitrate in eine variable Bitrate, als ein Rahmenpuffer zur Bewegungskompensation und als ein Anzeigepuffer in der digitalen Betriebsart verwendet wird.

41. Empfänger nach Anspruch 37, wobei die analoge Verarbeitungseinrichtung die Luminanz/Chrominanz-Abtrennung des Kanal-demodulierten analogen Fernsehsignals durchführt.

42. Empfänger nach Anspruch 41, wobei in der analogen Videobetriebsart der Speicher als ein Rahmenspeicher zur Luminanz/Chrominanz-Abtrennung des Kanal-demodulierten analogen Fernsehsignals verwendet wird.

43. Empfänger nach Anspruch 1, ferner umfassend:
einen ersten Eingangsanschluß zum Empfangen eines Kanal-demodulierten analogen TV-Signals;
einen zweiten Eingangsanschluß zum Empfangen eines Kanal-decodierten digitalen TV-Signals; und wobei
der Speicher zum Speichern von Daten die Daten entweder in einem Prozeß der Video-Decodierung des Kanal-decodierten digitalen Fernsehsignals oder in einem Prozeß der Verarbeitung des Kanal-demodulierten analogen Fernsehsignals speichert; und ferner umfassend:
einen Mikroprozessor mit einem Einganganschluß zum Empfangen des Kanal-decodierten digitalen Fernsehsignals, Rekonstruieren des digitale Videosignals aus dem digitalen Fernsehsignal in der digitalen Videobetriebsart, und zum Schreiben/Auslesen des digitalen Fernsehsignals während der digitalen Videobetriebsart oder des digitalisierten analogen Fernsehsignals während der analogen Videobetriebsart in den und aus dem Speicher gemäß dem Betriebsart-Auswahlsignal;
eine analoge Verarbeitungseinrichtung mit einem Eingangsanschluß zum Empfangen des Kanal-demodulierten analogen Fernsehsignals, einem Eingangsanschluß zum Empfangen von aus dem Speicher durch den Mikroprozessor ausgelesenen Daten, einem Ausgangsanschluß zum Ausgeben von Daten an den Mikroprozessor, um die Daten in dem Speicher zu speichern, und einem Ausgangsanschluß zum Ausgeben des verarbeiteten analogen Fernsehsignals;
eine digitale Verarbeitungseinrichtung zum Umwandeln des von dem Mikroprozessor ausgegebenen rekonstruierten digitalen Videosignals in ein analoges Signal;
eine Umschalteinrichtung zum Auswählen eines von dem rekonstruierten digitalen Videosignal aus dem Mikroprozessor und dem verarbeiteten analogen Fernsehsignal; und
eine Anzeigesteuereinrichtung zum Steuem des von der Umschalteinrichtung ausgegebenen Signals, um das Signal auf einer Anzeigeeinrichtung anzuzeigen.

44. Empfänger nach Anspruch 43, wobei der Mikroprozessor das Kanal-decodierte digitale Fernsehsignal multiplexiert, einen Videodatenstrom aus dem Kanal-decodierten digitalen Fernsehsignal durch Systemdecodierung extrahiert, und das digitale Videosignal aus dem extrahierten Videodatenstrom rekonstruiert.

45. Empfänger nach Anspruch 43, welcher femer eine digitale Verarbeitungseinrichtung zum Umwandeln des von dem Mikroprozessor ausgegebenen rekonstruierten digitalen Videosignals in analoge Signale und dann zum Zuführen des umgewandelten analogen Signals zu der Umschalteinrichtung umfaßt.

46. Empfänger nach Anspruch 43, wobei die Anzeigesteuervorrichtung das umgeschaltete Signal in ein analoges Signal umwandelt.

47. Empfänger nach Anspruch 44, wobei der Speicher als ein Puffer zum temporären Speichern des Kanal-demodulierten analogen Fernsehsignals, als ein Kanalpuffer zum Umwandeln der Übertragungsrate mit einer konstanten Bitrate in eine variable Bitrate, als ein Rahmenpuffer zur Bewegungskompensation und als ein Anzeigepuffer verwendet wird.

48. Empfänger nach Anspruch 1, femer umfassend:
einen ersten Eingangsanschluß zum Empfangen eines Kanal-demodulierten analogen TV-Signals;
einen zweiten Eingangsanschluß zum Empfangen eines Kanal-decodierten digitalen TV-Signals; und wobei
der Speicher zum Speichern von Daten Daten entweder in einem Prozeß der Video-Decodierung des Kanal-decodierten digitalen Fernsehsignals oder in einem Prozeß der Verarbeitung des Kanal-demodulierten analogen Fernsehsignals speichert; und ferner umfassend:
einen Mikroprozessor mit einem Einganganschluß zum Empfangen des Kanal-decodierten digitalen Fernsehsignals, Extrahieren des digitalen Videosignals aus dem digitalen Fernsehsignal in der digitalen Videobetriebsart, und zum Schreiben/Auslesen des digitalen Fernsehsignals während der digitalen Videobetriebsart oder des digitalisierten analogen Fernsehsignals während der analogen Videobetriebsart in den und aus dem Speicher gemäß dem Betriebsart-Auswahlsignal;
eine analoge Verarbeitungseinrichtung mit einem Eingangsanschluß zum Empfangen des Kanal-demodulierten analogen Fernsehsignals, einem Eingangsanschluß zum Empfangen von aus dem Speicher durch den Mikroprozessor ausgelesenen Daten, einem Ausgangsanschluß zum Ausgeben von Daten an den Mikroprozessor, um die Daten in dem Speicher zu speichern, und einem Ausgangsanschluß zum Ausgeben des verarbeiteten analogen Fernsehsignals;
eine digitale Verarbeitungseinrichtung zum Rekonstruieren des Videosignals aus dem Videodatenstrom;
eine Umschalteinrichtung zum Auswählen eines von dem Ausgangsignal aus der digitalen Verarbeitungseinrichtung und dem verarbeiteten analogen TV-Signal; und
eine Anzeigesteuereinrichtung zum Steuern des von der Umschalteinrichtung ausgegebenen Signals, um das Signal auf einer Anzeigeeinrichtung anzuzeigen.

49. Empfänger nach Anspruch 48, wobei der Mikroprozessor das Kanal-decodierte digitale Fernsehsignal multiplexiert und einen Videodatenstrom aus dem Kanal-decodierten digitalen Fernsehsignal durch Systemdecodierung extrahiert.

50. Empfänger nach Anspruch 48, wobei die digitale Verarbeitungseinrichtung das rekonstruierte digitale Videosignal in ein analoges Signal umwandelt.

51. Empfänger nach Anspruch 48, wobei die Anzeigesteuervorrichtung das in der Umschalteinrichtung umgeschaltete Signal in ein analoges Signal umwandelt.

52. Empfänger nach Anspruch 49, wobei der Speicher als ein Puffer zum temporären Speichern des Kanal-demodulierten analogen Fernsehsignals, als ein Kanalpuffer zum Umwandeln der Übertragungsrate mit einer konstanten Bitrate in eine variable Bitrate, als ein Rahmenpuffer zur Bewegungskompensation und als ein Anzeigepuffer in der digitalen Videobetriebsart verwendet wird.

53. Empfänger nach Anspruch 43 oder 48, wobei die analoge Verarbeitungseinrichtung eine Luminanz/Chrominanz-Abtrennung des Kanal-demodulierten analogen Fernsehsignals durchführt.

54. Empfänger nach Anspruch 53, wobei der Speicher als ein Rahmenspeicher zur Luminanz/Chrominanz-Abtrennung des Kanal-demodulierten analogen Fernsehsignals in der analogen Videobetriebsart verwendet wird.

55. Empfänger nach Anspruch 37, 43 oder 48, wobei die analoge Verarbeitungseinrichtung eine Nachverarbeitung des Kanal-demodulierten analogen Fernsehsignals durchführt.

56. Empfänger nach Anspruch 55, wobei der Speicher als ein Rahmenspeicher zum Nachverarbeiten des Kanal-demodulierten analogen Fernsehsignals in der analogen Videobetriebsart verwendet wird.

57. Empfänger nach Anspruch 37, 43 oder 48, wobei die analoge Verarbeitungseinrichtung eine Luminanz/Chrominanz-Abtrennung und eine Nachverarbeitung des Kanal-demodulierten analogen Fernsehsignals durchführt.

58. Empfänger nach Anspruch 57, wobei der Speicher als ein Rahmenspeicher zur Luminanz/Chrominanz-Abtrennung und Nachverarbeitung des Kanal-demodulierten analogen Fernsehsignals in der analogen Videobetriebsart verwendet wird.

59. Empfänger nach Anspruch 1, ferner umfassend:
einen ersten Eingangsanschluß zum Empfangen eines Kanal-demodulierten analogen TV-Signals;
einen zweiten Eingangsanschluß zum Empfangen eines Kanal-decodierten digitalen TV-Signals; und wobei
der Speicher zum Speichern von Daten Daten in einem Prozeß entweder einer Quellen-Decodierung des Kanal-decodierten digitalen Fernsehsignals oder der Verarbeitung des Kanal-demodulierten analogen Fernsehsignals speichert; und femer umfassend:
eine digitale Verarbeitungseinrichtung, die einen Eingangsangschluß zum Empfangen des Kanal-decodierten Signals enthält, und zum Extrahieren des Videodatenstroms aus dem Kanal-decodierten Fernsehsignal;
einen Mikroprozessor zum Eingeben des aus der digitalen Verarbeitungseinrichtung extrahierten Videodatenstroms, um dadurch das digitale Videosignal zu rekonstruieren, und um das digitalisierte analoge Fernsehsignals in der analogen Videobetriebsart in den und aus dem Speicher zu schreiben und zu lesen;
eine analoge Verarbeitungseinrichtung mit einem Eingangsanschluß zum Empfangen des Kanal-demodulierten analogen Fernsehsignals, einem Eingangsanschluß zum Empfangen von aus dem Speicher durch den Mikroprozessor ausgelesenen Daten, einem Ausgangsanschluß zum Ausgeben von Daten an den Mikroprozessor, um die Daten in dem Speicher zu speichern, und einem Ausgangsanschluß zum Ausgeben des verarbeiteten analogen Fernsehsignals;
eine Umschalteinrichtung zum Auswählen eines von dem Ausgangsignal aus der digitalen Verarbeitungseinrichtung und dem verarbeiteten analogen TV-Signal; und
eine Anzeigesteuereinrichtung zum Steuern des von der Umschalteinrichtung ausgegebenen Signals, um das Signal auf einer Anzeigeeinrichtung anzuzeigen.

60. Empfänger nach Anspruch 59, welcher femer eine Umwandlungseinrichtung zum Umwandeln des in dem Mikroprozessor rekonstruierten digitalen Videosignals in ein analoges Signal und dann zum Zuführen des umgewandelten analogen Signals zu der Umschalteinrichtung umfaßt, wobei das von der analogen Verarbeitungseinrichtung ausgegebene Signal ein analoges Signal ist.

61. Empfänger nach Anspruch 59, wobei die Anzeigesteuereinrichtung das in der Umschalteinrichtung umgeschaltete Signal in ein analoges Signal umwandelt, wenn das umgeschaltete Signal ein digitales Signal ist.

62. Empfänger nach Anspruch 59, wobei der Speicher als ein Kanalpuffer zum Umwandeln einer Übertragungsrate mit einer konstanten Bitrate in eine variable Bitrate, als ein Rahmenpuffer zur Bewegungskompensation und als ein Anzeigepuffer in der digitalen Videobetriebsart verwendet wird.

63. Empfänger nach Anspruch 59, wobei die analoge Verarbeitungseinrichtung eine Luminanz/Chrominanz-Abtrennung des Kanal-demodulierten analogen Fernsehsignals durchführt.

64. Empfänger nach Anspruch 63, wobei der Speicher als ein Rahmenspeicher zur Luminanz/Chrominanz-Abtrennung des Kanal-demodulierten analogen Fernsehsignals in der analogen Videobetriebsart verwendet wird.

65. Empfänger nach Anspruch 59, wobei die analoge Verarbeitungseinrichtung eine Nachverarbeitung des Kanal-demodulierten analogen Fernsehsignals durchführt.

66. Empfänger nach Anspruch 65, wobei der Speicher als ein Rahmenspeicher zum Nachverarbeiten des Kanal-demodulierten analogen Fernsehsignals in der analogen Videobetriebsart verwendet wird.

67. Empfänger nach Anspruch 59, wobei die analoge Verarbeitungseinrichtung eine Luminanz/Chrominanz-Abtrennung und eine Nachverarbeitung des Kanal-demodulierten analogen Fernsehsignals durchführt.

68. Empfänger nach Anspruch 67, wobei der Speicher als ein Rahmenspeicher zur Luminanz/Chrominanz-Abtrennung und Nachverarbeitung des Kanal-demodulierten analogen Fernsehsignals in der analogen Videobetriebsart verwendet wird.

69. Verfahren zum Empfangen eines Fernsehsignals, das gemäß einem vorbestimmten analogen Sendeverfahren analog verarbeitet ist, und eines mittels eines vorbestimmten digitalen Signalformats digital verarbeiteten Fernsehsignals, mit den Schritten:
(a) Erzeugen eines Betriebsart-Auswahlsignals, um zu ermitteln, ob ein von einem Benutzer ausgewählter Kanal ein Fernsehkanal einer analogen Videobetriebsart oder ein Fernsehkanal einer digitalen Videobetriebsart ist;
(b) gemäß dem Betriebsart-Auswahlsignal entweder Speichern des empfangenen digitalen Fernsehsignals in einem Speicher und Decodieren der in dem Speicher gespeicherten Daten in der digitalen Videobetriebsart, oder Speichern des empfangenen analogen Fernsehsignals in dem Speicher, um die in dem Speicher gespeicherten Daten auszulesen, um die Daten in dem Speicher in der analogen Videobetriebsart zu verarbeiten.

## Revendications

1. Récepteur ayant un mode vidéo analogique pour recevoir des signaux de télévision ayant subi un traitement analogique par un procédé de diffusion analogique prédéterminée et un mode vidéo numérique pour recevoir des signaux de télévision ayant subi un traitement numérique par un format de signal numérique prédéterminé, le récepteur comportant :
des premiers moyens de traitement de signal (100), pour traiter les signaux de télévision analogiques reçus, et
des seconds moyens de traitement de signal (200), pour décoder le signal de télévision numérique reçu, le récepteur étant **caractérisé en ce qu'**il comporte en outre :
une mémoire (330) pour mémoriser des données afin de décoder le signal TV numérique dans lesdits seconds moyens de traitement de signal (200) et traiter un signal de télévision analogique numérisé dans lesdits premiers moyens de traitement de signal (100),
des moyens de génération (310), pour générer un signal de sélection de mode qui représente ledit mode vidéo analogique ou ledit mode vidéo numérique, et
un contrôleur de mémoire (320), pour commander ladite mémoire (330) conformément audit signal de sélection de mode afin d'écrire le signal traité dans lesdits premiers moyens de traitement de signal (100) dans ladite mémoire (330) ou lire le signal traité dans ces derniers à partir de ladite mémoire (330), durant ledit mode vidéo analogique et écrire dans ladite mémoire ou lire à partir de celle-ci le signal de télévision numérique durant ledit mode vidéo numérique.

2. Récepteur selon la revendication 1, dans lequel lesdits premiers moyens de traitement de signal (100) comportent :
un premier syntoniseur (511), pour sélectionner un canal voulu parmi des canaux de télévision analogiques reçus, pour délivrer en sortie un signal de fréquence intermédiaire dudit canal sélectionné,
un premier démodulateur de canal (512) pour amplifier et démoduler ledit signal de fréquence intermédiaire du canal sélectionné par ledit premier syntoniseur (511), pour délivrer en sortie un signal vidéo, et
un séparateur luminance/chrominance pour séparer le signal de luminance (Y) et le signal de chrominance (C) à partir des signaux vidéo délivrés en sortie par ledit premier démodulateur de canal (512), en utilisant une corrélation entre des images adjacentes mémorisées dans ladite mémoire (330, 519) et/ou entre des lignes adjacentes mémorisées dans ladite mémoire.

3. Récepteur selon la revendication 2, comportant en outre un post-processeur pour effectuer un post-traitement en utilisant ledit signal de luminance séparé pour améliorer la qualité d'image.

4. Récepteur selon la revendication 1, dans lequel ledit contrôleur de mémoire (320) inclut des moyens de commutation (320.1 à 320.n) pour sélectionner l'une des sorties desdits premiers et seconds moyens de traitement de signal (100, 200) conformément audit signal de sélection de mode pour écrire dans ladite mémoire (330) et délivrer des données mémorisées dans ladite mémoire (330) auxdits moyens de traitement de signal sélectionnés.

5. Récepteur selon la revendication 4, dans lequel lesdits moyens de commutation incluent au moins un multiplexeur.

6. Récepteur selon la revendication 1, comportant en outre :
des moyens de commutation (340, 430, 524, 528, 622) pour sélectionner l'un des signaux de sortie à partir desdits premiers moyens de traitement de signal (100, 511-13, 611-13) et desdits seconds moyens de traitement de signal (200, 514-16, 614-16) conformément audit signal de sélection de mode, et
des moyens de commande d'affichage (350, 440, 520, 620) pour afficher le signal sélectionné par lesdits moyens de commutation sur un afficheur (360, 450, 521, 621).

7. Récepteur selon la revendication 1, dans lequel les moyens de génération et le contrôleur de mémoire sont reliés à des lignes de bus communes ayant une ligne de données ou de multiples lignes de données et une ligne d'horloge pour générer des données de sélection de mode qui représentent ledit mode vidéo analogique ou ledit mode vidéo numérique dans lequel les premiers moyens de traitement de signal sont reliés auxdites lignes de bus communes, pour le traitement de signal du signal de télévision analogique reçu conformément aux données de sélection de mode, les seconds moyens de traitement de signal sont reliés auxdites lignes de bus communes, pour décoder le signal de télévision numérique reçu conformément aux données de sélection de mode et une mémoire est reliée auxdites lignes de bus communes, pour décoder le signal de télévision numérique provenant desdits seconds moyens de traitement de signal, mémoriser des données traitées dans lesdits premiers moyens de traitement signal conformément auxdites données de sélection de mode pour représenter un mode de service vidéo analogique, et délivrer les données mémorisées auxdits premiers moyens de traitement de signal.

8. Récepteur selon la revendication 7, dans lequel lesdits premiers moyens de traitement de signal comportent :
un premier syntoniseur pour sélectionner un canal voulu parmi des canaux de télévision analogiques reçus, pour délivrer en sortie un signal de fréquence intermédiaire,
un premier démodulateur de canal pour amplifier et démoduler ledit signal de fréquence intermédiaire du canal sélectionné par ledit premier syntoniseur, pour délivrer en sortie un signal vidéo, et
un séparateur luminance/chrominance pour séparer le signal vidéo délivré en sortie par ledit premier démodulateur de canal en signal de luminance (Y) et signal de chrominance (C) en utilisant une corrélation entre des images adjacentes mémorisées dans ladite mémoire et entre des lignes adjacentes mémorisées dans ladite mémoire.

9. Récepteur selon la revendication 8, comportant en outre un post-processeur pour effectuer un post-traitement dudit signal de luminance séparé pour améliorer la qualité d'image.

10. Récepteur selon la revendication 2 ou la revendication 8, dans lequel, dans ledit mode vidéo analogique, ladite mémoire est utilisée en tant que mémoire de trames pour mémoriser des données délivrées en sortie par ledit premier démodulateur de canal en une unité d'image.

11. Récepteur selon la revendication 3 ou 9, dans lequel, dans ledit mode vidéo analogique, ladite mémoire est utilisée en tant que mémoire de trames pour mémoriser des données délivrées en sortie par ledit premier démodulateur de canal en une unité d'image et des données délivrées en entrée par ledit post-processeur en une unité d'image.

12. Récepteur selon la revendication 1 ou 7, dans lequel lesdits premiers moyens de traitement de signal comportent :
un premier syntoniseur pour sélectionner un canal voulu parmi des canaux de télévision analogiques reçus, pour délivrer en sortie un signal de fréquence intermédiaire,
un premier démodulateur de canal pour amplifier et démoduler ledit signal de fréquence intermédiaire du canal sélectionné par ledit premier syntoniseur, pour délivrer en sortie un signal vidéo, et
un post-processeur pour effectuer un post-traitement en utilisant le signal vidéo délivré en sortie par ledit premier démodulateur de canal et des données mémorisées dans ladite mémoire.

13. Récepteur selon la revendication 12, dans lequel, dans ledit mode vidéo analogique, ladite mémoire est utilisée en tant que mémoire de trames pour mémoriser des données délivrées en sortie par ledit premier démodulateur de canal en une unité d'image.

14. Récepteur selon la revendication 1 ou 7, dans lequel lesdits seconds moyens de traitement de signal comportent :
un second syntoniseur pour sélectionner un signal de canal voulu parmi des signaux de télévision reçus codés par le format de signal numérique,
un second démodulateur de canal pour effectuer le codage de canal du signal de canal voulu délivré en sortie par ledit second syntoniseur,
un décodeur système pour délivrer en sortie un flot de données vidéo à partir du signal ayant subi un décodage de canal délivré en sortie par ledit second démodulateur de canal, et
un décodeur vidéo pour reconstituer des données vidéo dudit flot de données vidéo.

15. Récepteur selon la revendication 14, dans lequel, dans ledit mode vidéo numérique, ladite mémoire est utilisée en tant que tampon de canal pour convertir le débit de transmission d'un débit binaire constant en un débit binaire variable pour le décodage vidéo et en tant que tampon de trames pour la compensation de mouvement.

16. Récepteur selon la revendication 7, comportant en outre :
des moyens de commutation pour sélectionner l'un des signaux de sortie provenant desdits premiers moyens de traitement de signal et desdits seconds moyens de traitement de signal conformément auxdites données de sélection de mode, et
des moyens de commande d'affichage pour afficher le signal sélectionné par lesdits moyens de commutation sur l'afficheur.

17. Récepteur selon la revendication 1, comportant en outre :
une première borne d'entrée pour recevoir un signal de télévision analogique numérisé, et
une seconde borne d'entrée pour recevoir un signal de télévision numérique ayant subi un décodage de canal, et dans lequel
la mémoire servant à mémoriser les données mémorise des données afin d'effectuer le décodage vidéo dudit signal de télévision numérique ayant subi un décodage de canal, et comporte en outre :
un microprocesseur pour traiter l'un des signaux délivrés en entrée dans lesdites première et seconde bornes d'entrée conformément audit signal de sélection de mode, et pour commander ladite mémoire de telle sorte que ladite mémoire est partagée en écrivant dans ladite mémoire ou en lisant à partir de celle-ci le signal analogique numérisé qui est entré dans ladite première borne d'entrée dans ledit mode vidéo analogique, et
des moyens de commande d'affichage pour commander le signal traité par ledit microprocesseur de manière à afficher le signal sur un afficheur.

18. Récepteur selon la revendication 17, comportant en outre un décodeur système pour extraire un flot de données vidéo à partir du signal de télévision numérique ayant subi un décodage de canal délivré en entrée dans ladite seconde borne d'entrée.

19. Récepteur selon la revendication 18, dans lequel ledit microprocesseur effectue la séparation luminance/chrominance du signal de télévision analogique numérisé délivré en entrée dans ladite première borne d'entrée, dans ledit mode vidéo analogique, et reconstituant le signal vidéo numérique du flot de données vidéo délivré en sortie par ledit décodeur système, dans ledit mode vidéo numérique.

20. Récepteur selon la revendication 17, dans lequel ledit microprocesseur effectue la séparation luminance/chrominance du signal de télévision analogique numérisé qui est délivré en entrée dans ladite première borne d'entrés, dans ledit mode vidéo analogique, et effectue un décodage système, dans ledit mode vidéo numérique, pour extraire ainsi un flot de données vidéo à partir du signal de télévision numérique ayant subi un décodage de canal délivré en entrée dans ladite seconde borne d'entrée.

21. Récepteur selon la revendication 20, comportant en outre un décodeur vidéo pour reconstituer le signal vidéo numérique du flot de données vidéo délivré en sortie par ledit microprocesseur.

22. Récepteur selon la revendication 17, dans lequel ledit microprocesseur effectue la séparation luminance/chrominance du signal de télévision analogique numérisé délivré en entrée dans ladite première borne d'entrée dans ledit mode vidéo analogique, et extrait un flot de données vidéo à partir des signaux de télévision numériques ayant subi un décodage de canal délivrés en entrée dans ladite seconde borne d'entrée, et reconstitue un signal vidéo numérique du flot de données vidéo extrait dans ledit mode vidéo numérique.

23. Récepteur selon la revendication 17, comportant en outre un décodeur système et vidéo pour extraire un flot de données vidéo à partir du signal de télévision numérique ayant subi un décodage de canal délivré en entrés dans ladite seconde borne d'entrée et pour reconstituer un signal vidéo numérique du flot de données vidéo extrait.

24. Récepteur selon la revendication 23, dans lequel ledit microprocesseur effectue la séparation luminance/chrominance des signaux de télévision analogiques numérisés délivrés en entrée dans ladite première borne d'entrée, dans ledit mode vidéo analogique, et écrit ledit signal de télévision numérique dans ladite mémoire et lit ce dernier à partir de celle-ci pour effectuer un décodage système et un décodage vidéo, dans ledit mode vidéo numérique.

25. Récepteur selon la revendication 19, dans lequel ledit microprocesseur effectue un post-traitement en utilisant un signal de luminance séparé.

26. Récepteur selon la revendication 19, dans lequel ladite mémoire est utilisée en tant que mémoire de trames pour la séparation luminance/chrominance du signal de télévision analogique numérisé, dans ledit mode vidéo analogique.

27. Récepteur selon la revendication 25, dans lequel ladite mémoire est utilisée en tant que mémoire de trames pour la séparation luminance/chrominance et le post-traitement, dans ledit mode vidéo analogique.

28. Récepteur selon la revendication 19, dans lequel ladite mémoire est utilisée en tant que tampon de canal pour convertir le débit de transmission d'un débit binaire constant en un débit binaire variable, en tant que tampon de trames pour la compensation de mouvement, et en tant que tampon d'affichage.

29. Récepteur selon la revendication 18, dans lequel ledit microprocesseur effectue le post-traitement du signal de télévision analogique numérisé délivré en entrée dans ladite première borne d'entrés, dans ledit mode vidéo analogique, et reconstitue le signal vidéo numérique délivré en sortie par ledit décodeur système, dans ledit mode vidéo numérique.

30. Récepteur selon la revendication 17, dans lequel ledit microprocesseur effectue le post-traitement du signal de télévision analogique numérisé délivré en entrée dans ladite première borne d'entrée, dans ledit mode vidéo analogique, et le décodage système du signal de télévision numérique ayant subi un décodage de canal délivré en entrée dans ladite seconde borne d'entrée, dans ledit mode vidéo numérique, pour extraire ainsi un flot de données vidéo.

31. Récepteur selon la revendication 30, dans lequel ledit microprocesseur comporte en outre un décodeur vidéo pour reconstituer ledit flot de données vidéo dudit signal vidéo numérique.

32. Récepteur selon la revendication 17, dans lequel ledit microprocesseur effectue le post-traitement du signal de télévision analogique numérisé délivré en entrée dans ladite première borne d'entrée, dans ledit mode vidéo analogique, et le décodage système du signal de télévision numérique ayant subi un décodage de canal délivré en entrée dans ladite seconde borne d'entrée, dans ledit mode vidéo numérique, pour extraire ainsi un flot de données vidéo, et reconstitue le signal vidéo numérique du flot de données vidéo extrait.

33. Récepteur selon la revendication 17, comportant en outre un décodeur système et vidéo pour extraire un flot de données vidéo à partir d'un signal de télévision numérique ayant subit un décodage de canal délivré en entrée dans ladite seconde borne d'entrée et reconstituer des données vidéo du flot de données vidéo extrait.

34. Récepteur selon la revendication 33, dans lequel ledit microprocesseur effectue le post-traitement du signal de télévision analogique numérisé délivré en entrée dans ladite première borne d'entrée, dans ledit mode vidéo analogique, et écrit dans ladite mémoire et lit à partir de cette dernière ledit signal de télévision numérique pour effectuer un décodage système et un décodage vidéo, dans ledit mode vidéo numérique.

35. Récepteur selon la revendication 29, dans lequel ladite mémoire est utilisée en tant que mémoire de trames pour le post-traitement, dans ledit mode vidéo analogique.

36. Récepteur selon la revendication 29, dans lequel ladite mémoire est utilisée en tant que mémoire de canal pour convertir le débit de transmission d'un débit binaire constant en un débit binaire variable, en tant que tampon de trames pour la compensation de mouvement, et en tant que tampon d'affichage, dans ledit mode vidéo numérique.

37. Récepteur selon la revendication 1, comportant en outre :
une première borne d'entrée pour recevoir un signal TV analogique ayant subi une démodulation de canal,
une seconde borne d'entrée pour recevoir un signal TV numérique ayant subit un décodage de canal, et dans lequel
la mémoire servant à mémoriser des données mémorise des données d'un processus de décodage de source dudit signal de télévision numérique ayant subi un décodage de canal ou d'un processus de traitement dudit signal de télévision analogique ayant subi une démodulation de canal, et comporte encore en outre :
un microprocesseur pour écrire dans ladite mémoire ou lire à partir de celle-ci ledit signal de télévision numérique durant ledit mode vidéo numérique ou ledit signal de télévision analogique numérisé durant ledit mode vidéo analogique, conformément audit signal de sélection de mode,
des moyens de traitement analogique ayant une borne d'entrée pour recevoir ledit signal de télévision analogique ayant subi une démodulation de canal, une borne d'entrée pour recevoir des données lues à partir de ladite mémoire par ledit microprocesseur, une borne de sortie pour délivrer en sortie des données audit microprocesseur pour mémoriser lesdites données dans ladite mémoire et une borne de sortie pour délivrer en sortie un signal de télévision analogique traité,
des moyens de traitement numérique ayant une borne d'entrée pour recevoir ledit signal de télévision analogique ayant subi un décodage de canal, des bornes d'entrée et de sortie reliées audit microprocesseur, et une borne pour délivrer en sortie ledit signal vidéo reconstitué à partir dudit signal de télévision numérique ayant subi un décodage de canal,
des moyens de commutation pour sélectionner l'un dudit signal vidéo numérique reconstitué et dudit signal de télévision analogique traité conformément audit signal de sélection de mode, et
des moyens de commande d'affichage pour commander le signal délivré en sortie par lesdits moyens de commutation pour afficher le signal sur un afficheur.

38. Récepteur selon la revendication 37, dans lequel lesdits moyens de traitement numérique extraient un flot de données vidéo à partir dudit signal de télévision numérique ayant subi un décodage de canal à l'aide d'un décodage système, et reconstituent le signal vidéo numérique dudit flot de données vidéo extrait.

39. Récepteur selon la revendication 37, dans lequel lesdits moyens de traitement numérique extraient un flot de données vidéo à partir dudit signal de télévision numérique ayant subi un décodage de canal, reconstituent le signal vidéo numérique dudit flot de données vidéo extrait, et convertissent ledit signal vidéo numérique reconstitué en signal vidéo analogique.

40. Récepteur selon la revendication 37, dans lequel ladite mémoire est utilisée en tant que tampon de canal pour convertir le débit de transmission d'un débit binaire constant en un débit binaire variable, en tant que tampon de trames pour la compensation de mouvement, et en tant que tampon d'affichage, dans ledit mode numérique.

41. Récepteur selon la revendication 37, dans lequel lesdits moyens de traitement analogique effectuent la séparation luminance/chrominance dudit signal de télévision analogique ayant subi une démodulation de canal.

42. Récepteur selon la revendication 41, dans lequel, dans ledit mode vidéo analogique, ladite mémoire est utilisée en tant que mémoire de trames pour la séparation luminance/chrominance dudit signal de télévision analogique ayant subi une démodulation de canal.

43. Récepteur selon la revendication 1, comportant en outre :
une première borne d'entrée pour recevoir un signal de télévision analogique ayant subi une démodulation de canal,
une seconde borne d'entrée pour recevoir un signal TV numérique ayant subi un décodage de canal, et dans lequel
la mémoire servant à mémoriser des données mémorise des données d'un processus de décodage vidéo dudit signal de télévision numérique ayant subi un décodage de canal ou d'un processus de traitement dudit signal de télévision analogique ayant subi une démodulation de canal, et comportant encore en outre :
un microprocesseur ayant une borne d'entrée pour recevoir ledit signal de télévision numérique ayant subi un décodage de canal, reconstituer ledit signal vidéo numérique dudit signal de télévision numérique dans ledit mode vidéo numérique et pour écrire dans ladite mémoire ou lire à partir de celle-ci ledit signal de télévision numérique durant ledit mode vidéo numérique ou ledit signal de télévision analogique numérisé durant ledit mode vidéo analogique conformément audit signal de sélection de mode,
des moyens de traitement analogique ayant une borne d'entrée pour recevoir ledit signal de télévision analogique ayant subi une démodulation de canal, une borne d'entrée pour recevoir des données lues à partir de ladite mémoire par ledit microprocesseur, une borne de sortie pour délivrer en sortie des données audit microprocesseur pour mémoriser lesdites données dans ladite mémoire et une borne de sortie pour délivrer en sortie un signal de télévision analogique traité,
des moyens de traitement numérique pour convertir ledit signal vidéo numérique reconstitué délivré en sortie par ledit microprocesseur en un signal analogique,
des moyens de commutation pour sélectionner l'un parmi ledit signal vidéo numérique reconstitué provenant dudit microprocesseur et ledit signal de télévision analogique traité, et
des moyens de commande d'affichage pour commander le signal délivré en sortie par lesdits moyens de commutation pour afficher le signal sur un afficheur.

44. Récepteur selon la revendication 43, dans lequel ledit microprocesseur effectue le multiplexage dudit signal de télévision numérique ayant subi un décodage de canal, extrait un flot de données vidéo à partir dudit signal de télévision numérique ayant subi un décodage de canal par un décodage système, et reconstitue ledit signal vidéo numérique dudit flot de données vidéo extrait.

45. Récepteur selon la revendication 43, comportant en outre des moyens de traitement numérique pour convertir un signal vidéo numérique reconstitué délivré en sortie par ledit microprocesseur en signaux analogiques et délivrer ensuite le signal analogique converti auxdits moyens de commutation.

46. Récepteur selon la revendication 43, dans lequel lesdits moyens de commande d'affichage convertissent ledit signal commuté en signal analogique.

47. Récepteur selon la revendication 44, dans lequel ladite mémoire est utilisée en tant que tampon pour mémoriser temporairement ledit signal de télévision analogique ayant subi une démodulation de canal, en tant que tampon de canal pour convertir le débit de transmission d'un débit binaire constant en un débit binaire variable, en tant que tampon de trames pour la compensation de mouvement, et en tant que tampon d'affichage.

48. Récepteur selon la revendication 1, comportant en outre :
une première borne d'entrée pour recevoir un signal TV analogique ayant subi une démodulation de canal,
une seconde borne d'entrée pour recevoir un signal TV numérique ayant subi un décodage de canal, et dans lequel
la mémoire servant à mémoriser des données mémorise des données d'un processus de décodage source dudit signal de télévision numérique ayant subi un décodage de canal ou d'un processus de traitement dudit signal de télévision analogique ayant subi une démodulation de canal, et comportant en outre encore :
un microprocesseur ayant une borne d'entrée pour recevoir ledit signal de télévision numérique ayant subi un décodage de canal, extraire un flot de données vidéo à partir dudit signal de télévision numérique ayant subi un décodage de canal dans ledit mode vidéo numérique, et pour écrire dans ladite mémoire ou lire à partir de celle-ci ledit signal de télévision numérique durant ledit mode vidéo numérique ou ledit signal de télévision analogique numérisé durant ledit mode vidéo analogique conformément audit signal de sélection de mode,
des moyens de traitement analogique ayant une borne d'entrée pour recevoir ledit signal de télévision analogique ayant subi une démodulation de canal, une borne d'entrée pour recevoir des données lues à partir de ladite mémoire par ledit microprocesseur, une borne de sortie pour délivrer en sortie des données audit microprocesseur pour mémoriser lesdites données dans ladite mémoire, et une borne de sortie pour délivrer en sortie un signal de télévision analogique traité,
des moyens de traitement numérique pour reconstituer le signal vidéo numérique à partir dudit flot de données vidéo,
des moyens de commutation pour sélectionner l'un parmi le signal de sortie desdits moyens de traitement numérique et ledit signal TV analogique traité, et
des moyens de commande d'affichage pour commander le signal délivré en sortie par lesdits moyens de commutation pour afficher le signal sur un afficheur.

49. Récepteur selon la revendication 48, dans lequel ledit microprocesseur effectue le multiplexage dudit signal de télévision numérique ayant subi un décodage de canal et extrait un flot de données vidéo à partir dudit signal de télévision numérique ayant subi un décodage de canal.

50. Récepteur selon la revendication 48, dans lequel lesdits moyens de traitement numérique convertissent des signaux vidéo numériques reconstitués en signal analogique.

51. Récepteur selon la revendication 48, dans lequel lesdits moyens de commande d'affichage convertissent le signal commuté dans lesdits moyens de commutation en signal analogique.

52. Récepteur selon la revendication 49, dans lequel ladite mémoire est utilisée en tant que tampon pour mémoriser temporairement ledit signal de télévision analogique ayant subi une démodulation de canal, en tant que tampon de canal pour convertir un débit de transmission d'un débit binaire constant en débit binaire variable, en tant que tampon de trames pour la compensation de mouvement, et en tant que tampon d'affichage, dans ledit mode vidéo numérique.

53. Récepteur selon la revendication 43 ou 48, dans lequel lesdits moyens de traitement analogique effectuent la séparation luminance/chrominance dudit signal de télévision analogique ayant subi une démodulation de canal.

54. Récepteur selon la revendication 53, dans lequel ladite mémoire est utilisée en tant que mémoire de trames pour la séparation luminance/chrominance dudit signal de télévision analogique ayant subi une démodulation de canal, dans ledit mode vidéo analogique.

55. Récepteur selon la revendication 37, 43 ou 48, dans lequel lesdits moyens de traitement analogique effectuent le post-traitement dudit signal de télévision analogique ayant subi une démodulation de canal.

56. Récepteur selon la revendication 55, dans lequel ladite mémoire est utilisée en tant que mémoire de trames pour le post-traitement dudit signal de télévision analogique ayant subi une démodulation de canal, dans ledit mode vidéo analogique.

57. Récepteur selon la revendication 37, 43 ou 48, dans lequel lesdits moyens de traitement analogique effectuent la séparation luminance/chrominance et le post-traitement dudit signal de télévision analogique ayant subi une démodulation de canal.

58. Récepteur selon la revendication 57, dans lequel ladite mémoire est utilisée en tant que mémoire de trames pour la séparation luminance/chrominance et le post-traitement dudit signal de télévision analogique ayant subi une démodulation de canal, dans ledit mode vidéo analogique.

59. Récepteur selon la revendication 1, comportant en outre :
une première borne d'entrée pour recevoir un signal TV analogique ayant subi une démodulation de canal,
une seconde borne d'entrée pour recevoir un signal TV numérique ayant subi un décodage de canal, et dans lequel
la mémoire servant à mémoriser des données mémorise des données d'un processus de décodage source dudit signal de télévision numérique ayant subi un décodage de canal ou d'un processus de traitement dudit signal de télévision analogique ayant subi une démodulation de canal, et comportant en outre encore :
des moyens de traitement numérique incluant une borne d'entrée pour recevoir ledit signal de télévision numérique ayant subi un décodage de canal et pour extraire un flot de données vidéo à partir dudit signal de télévision numérique ayant subi un décodage de canal,
un microprocesseur pour délivrer en entrée le flot de données vidéo extrait par lesdits moyens de traitement numérique, reconstituant ainsi un signal vidéo numérique, et écrire dans ladite mémoire et lire à partir de celle-ci le signal de télévision analogique numérisé dans le mode vidéo analogique,
des moyens de traitement analogique ayant une borne d'entrée pour recevoir ledit signal de télévision analogique ayant subi une démodulation de canal, une borne d'entrée pour recevoir des données lues à partir de ladite mémoire par ledit microprocesseur, une borne de sortie pour délivrer en sortie des données audit microprocesseur pour mémoriser lesdites données dans ladite mémoire, et une borne de sortie pour délivrer en sortie le signal de télévision analogique traité,
des moyens de commutation pour sélectionner l'un parmi le signal de sortie desdits moyens de traitement numérique et ledit signal TV analogique traité, et
des moyens de commande d'affichage pour commander le signal délivré en sortie par lesdits moyens de commutation pour afficher le signal sur un afficheur.

60. Récepteur selon la revendication 59, comportant en outre des moyens de conversion pour convertir le signal vidéo numérique reconstitué dans ledit microprocesseur en signal analogique et délivrer ensuite le signal analogique converti auxdits moyens de commutation, où le signal délivré en sortie par lesdits moyens de traitement analogique est un signal analogique.

61. Récepteur selon la revendication 59, dans lequel lesdits moyens de commande d'affichage convertissent le signal commuté dans lesdits moyens de commutation en signal analogique, où le signal commuté est un signal numérique.

62. Récepteur selon la revendication 59, dans lequel ladite mémoire est utilisée en tant que tampon de canal pour convertir un débit de transmission d'un débit binaire constant en débit binaire variable, en tant que tampon de trames pour la compensation de mouvement, et en tant que tampon d'affichage, dans ledit mode vidéo numérique.

63. Récepteur selon la revendication 59, dans lequel lesdits moyens de traitement analogique effectuent la séparation luminance/chrominance dudit signal de télévision analogique ayant subi une démodulation de canal.

64. Récepteur selon la revendication 63, dans lequel ladite mémoire est utilisée en tant que mémoire de trames pour la séparation luminance/chrominance dudit signal de télévision analogique ayant subi une démodulation de canal, dans ledit mode vidéo analogique.

65. Récepteur selon la revendication 59, dans lequel lesdits moyens de traitement analogique effectuent le post-traitement desdits signaux de télévision analogique ayant subi une démodulation de canal.

66. Récepteur selon la revendication 65, dans lequel ladite mémoire est utilisée en tant que mémoire de trames pour le post-traitement dudit signal de télévision analogique ayant subi une démodulation de canal, dans ledit mode vidéo analogique.

67. Récepteur selon la revendication 59, dans lequel lesdits moyens de traitement analogique effectuent la séparation luminance/chrominance et le post-traitement dudit signal de télévision analogique ayant subi une démodulation de canal.

68. Récepteur selon la revendication 67, dans lequel ladite mémoire est utilisée en tant que mémoire de trames pour la séparation luminance/chrominance et le post-traitement dudit signal de télévision analogique ayant subi une démodulation de canal, dans ledit mode vidéo analogique.

69. Procédé pour recevoir un signal de télévision ayant subi un traitement analogique conformément à un procédé de diffusion analogique prédéterminé et un signal de télévision ayant subi un traitement numérique par un format de signal numérique prédéterminé, comportant les étapes consistant à :
(a) générer un signal de sélection de mode pour déterminer si un canal sélectionné par un utilisateur est un canal de télévision d'un mode vidéo analogique ou un canal de télévision d'un mode vidéo numérique,
(b) en fonction dudit signal de sélection de mode, mémoriser le signal de télévision numérique reçu dans une mémoire et décoder les données mémorisées dans ladite mémoire dans ledit mode vidéo numérique, ou mémoriser le signal de télévision analogique reçu dans ladite mémoire pour lire les données mémorisées dans ladite mémoire pour traiter les données de ladite mémoire dans ledit mode vidéo analogique.
